# NEUE EUROPÄISCHE PATENTSCHRIFT

(11) **EP 2 413 047 B2**
(45) Veröffentlichungstag und Bekanntmachung des Hinweises auf die Entscheidung über den Einspruch: **17.11.2021**
(45) Hinweis auf die Patenterteilung: 02.10.2013
(21) Anmeldenummer: 10007980.5
(22) Anmeldetag: 30.07.2010
(51) Int. Cl.: F24D 12/02, F24D 19/10

(54) **Brauchwassererwärmungseinheit**
Domestic water heating unit
Unité de chauffage d'eau potable

(43) Veröffentlichungstag der Anmeldung: 01.02.2012
(73) Patentinhaber: Grundfos Management A/S, 8850 Bjerringbro (DK)
(72) Erfinder: Milthers, Jens Kjær, 9530 Støvring (DK); Jensen, Kim Hulegaard, 8840 Rødkærsbro (DK); Mortensen, Lars Sund, 9600 Aars (DK)
(74) Vertreter: Patentanwälte Vollmann Hemmer Lindfeld Partnerschaft mbB

(56) Entgegenhaltungen:
- EP-A1- 1 460 347
- EP-A1- 1 911 951
- EP-A2- 0 613 070
- WO-A1-01/44532
- WO-A1-2005/068838
- WO-A2-02/48615
- DE-A1- 4 035 115
- DE-A1- 4 206 074
- DE-A1- 10 048 912
- DE-A1- 10 109 196
- DE-A1- 10 145 069
- DE-A1- 10 214 735
- DE-A1-102007 018 725
- DE-A1-102008 003 314
- DE-A1-102008 006 017
- DE-A1-102012 016 606
- DE-C1- 10 130 805
- DE-C1- 10 145 968
- DE-C2- 10 109 808
- DE-C2- 19 625 734
- GB-A- 2 234 337
- GB-A- 2 293 438
- GB-A- 2 418 072
- US-A- 4 836 147
- US-A- 5 655 710
- Frischwasser-Modul FriWa für die Trinkwasser-Erwärmung nach dem Durchlaufhitzer-Prinzip, Montage- und Bedienungsanleitung, PAW GmbH & Co. KG, Stand 05/2005
- Montage- und Bedienungsanleitung Frischwassermodul FriWaMini Frischwasser-Modul FriWa der PAW GmbH & Co. KG, August 2009
- FriWa-Regelung Resol: Anschluss, Inbetriebnahme, Bedienung und Funktion; 07 Juli 2006
- RATIOfresh- Frischwasserstation, Technische Information/Montageanleitung, Wagner & Co, 2005
- "Warmes Wasser in Kaskaden", SHK-Profi Magazin, vol. 6, 2006,
- Sandler Energietechnik GmbH & Co KG: "System 018 Produktbeschreibung", , 2006,
- Sandler Energietechnik GmbH & Co KG: "System Sandler - Wärme clever geregelt", , 2006,
- Sandler Energietechnik GmbH & Co KG: "Systemtechnik - VARIO frech-eco", , 2006,
- G. Schulz: "Regelungstechnik 1. 2. Auflage", , 2004,
- Manfred Ottens: "Einführung in die Regelungstechnik - Skript zur Vorlesung", Technische Fachhochschule Berlin, Fachbereich VI: Informatik und Medien, 2008,

## Beschreibung

Die Erfindung betrifft eine Brauchwassererwärmungseinheit, welche vorgesehen ist zur Verwendung in einer Heizungsanlage, gemäß dem Oberbegriff des Anspruchs 1.

In Heizungsanlagen ist es meist auch erforderlich, Brauchwasser zu er-wärmen, welches beispielsweise an Waschbecken in einem Gebäude bereitgestellt wird.

Grundsätzlich ist es bekannt, Brauchwasser in einem Brauchwasserspeicher oder aber mit Hilfe eines Wärmetauschers zu erwärmen. Ein solcher Wärmetauscher weist einen ersten Strömungsweg für ein Heizmedium und einen zweiten Strömungsweg für das zu erwärmende Brauchwasser auf. Bei der Verwendung eines solchen Wärmetauschers besteht das Problem, relativ schnell die gewünschte Brauchwassertem-peratur auf der Ausgangsseite einstellen zu können. Dies gilt insbesondere deshalb, da diese Temperatur von verschiedenen Parametern, insbesondere auch dem Volumenstrom des Brauchwassers durch den Wärmetauscher abhängt.

GB 2 293 438 A offenbart eine Heizungsanlage mit einer Einrichtung zum Erwärmen von Brauchwasser. Diese weist einen Wärmetauscher auf, durch welchen primärseitig ein Heizmedium geleitet wird und sekundärseitig das zu erwärmende Brauchwasser fließt. In der Primärseite ist eine in der Drehzahl regelbare Pumpe angeordnet, welche das Heizmedium durch den Wärmetauscher fördert. Diese Pumpe wird in Abhängigkeit eines Temperatursignals eines Temperatursensors, welcher im Sekundär-kreis des Wärmetauschers an der Ausgangsseite angeordnet ist, geregelt. So kann die Zufuhr des Heizmediums durch Drehzahlregelung der Pumpe an die Ausgangstemperatur des Brauchwassers angepasst werden. Dieses Dokument offenbart den Oberbegriff des Anspruchs 1.

GB 2 234 337 A offenbart ein System zum Erwärmen von Brauchwasser mit einem Wärmetauscher, durch welchen primärseitig ein Heizmedium und sekundärseitig mit Hilfe einer Umwälzpumpe zu erwärmende Brauchwasser geführt wird. Diese Umwälzpumpe auf der Sekundärseite kann in Abhängigkeit der Eingangstemperatur des Brauchwassers sowie der Temperatur des Heizmediums ein- und ausgeschaltet werden.

Im Hinblick auf den aus GB 2 293 438 A bekannten Stand der Technik ist es Aufgabe der Erfindung, eine Brauchwassererwärmungseinheit bereitzustellen, welche einen Wärmeaustauscher zur Erwärmung von Heizmedium aufweist und eine weiter optimierte und schnellere Temperaturregelung für das austretende Brauchwasser ermöglicht.

Diese Aufgabe wird durch eine Brauchwassererwärmungseinheit mit den in Anspruch 1 angegebenen Merkmalen sowie ein System nach Anspruch 5 mit mehreren Brauchwassererwärmungseinheiten gelöst. Bevorzugte Ausführungsformen ergeben sich aus den Unteransprüchen, der nachfolgenden Beschreibung sowie den beigefügten Figuren.

Die erfindungsgemäße Brauchwassererwärmungseinheit ist vorgesehen zur Verwendung in einer Heizungsanlage. Dabei stellt die Brauchwassererwärmungseinheit bevorzugt eine Baugruppe bzw. eine Baueinheit dar, welche im Wesentlichen alle für die Brauchwassererwärmung erforderlichen Komponenten vereint. Dies sind insbesondere ein Wärmetauscher mit einem ersten Strömungsweg für ein Heizmedium und einem zweiten Strömungsweg für das zu erwärmende Brauchwasser sowie eine Umwälzpumpe zur Förderung des Heizmediums durch den ersten Strömungsweg. Diese Komponenten sind mit den erforderlichen Anschlussleitungen bzw. Anschlussarmaturen bevorzugt zu einer Baueinheit vormontiert, sodass diese Baueinheit als vormontierte Baugruppe leicht in eine Heizungsanlage bzw. ein Heizungssystem integriert werden kann. Die Brauchwassererwärmungseinheit weist dann vorzugsweise lediglich noch die erforderlichen elektrischen und hydraulischen Anschlüsse zur Verbindung mit den übrigen Teilen der Heizungsanlage auf. Dies sind insbesondere Leitungsanschlüsse für das Heizmedium sowie das Brauchwasser sowie gegebenenfalls eine Brauchwasserzirkulationsleitung und elektrische Anschlüsse, insbesondere eine Netzstromversorgung. Die gesamte Steuerung bzw. Regelung ist vorzugsweise ebenfalls in die Brauchwassererwärmungseinheit integriert, sodass hierfür keine externen Anschlüsse erforderlich sind. Gegebenfalls können auch noch erforderliche Sensoren und/oder Ventile in die Brauchwassererwärmungseinheit mitintegriert sein.

Erfindungsgemäß ist vorgesehen, dass die Umwälzpumpe, welche das Heizmedium durch den ersten Strömungsweg des Wärmetauschers fördert, in ihrer Drehzahl einstellbar bzw. regelbar ist. Hierzu ist eine Steuereinheit vorgesehen, welche die Drehzahl der Umwälzpumpe steuert bzw. regelt. Dies geschieht erfindungsgemäß in Abhängigkeit vom Wärmebedarf zum Erwärmen des Brauchwassers. D. h. durch Regelung der Drehzahl der Umwälzpumpe kann der Heizmedium-Volumenstrom sehr schnell an den Wärmebedarf zur Erwärmung des Brauchwassers angepasst werden, sodass ausgangsseitig des Wärmetauschers schnell die gewünschte Brauchwassertemperatur eingestellt werden kann. Da die Temperatur des Heizmediums sich in der Regel nicht verändern lässt, da sie durch einen Heizkessel oder beispielsweise durch einen Wärmespeicher vorgegeben ist, lässt sich die Wärmemenge, welche dem Wärmetauscher zugeführt wird, am besten über die Regelung des Volumenstroms des Heizmediums, beispielsweise heißes Wasser einer Heizungsanlage, einstellen. Die Umwälzpumpe ist ein- oder ausgangsseitig des ersten Strömungsweges mit dem Wärmetauscher verbunden. Dabei ist die Umwälzpumpe vorzugsweise nicht nur hydraulisch mit dem Wärmetauscher verbunden sondern auch in der Weise mechanisch, dass der Wärmetauscher das tragende Element darstellt, an welchem die Umwälzpumpe befestigt ist. Besonders bevorzugt ist die Umwälzpumpe eingangseitig des ersten Strömungsweges angeordnet, sodass der erste Strömungsweg durch den Wärmetauscher sich an die Druckseite der Umwälzpumpe anschließt.

Ausgangsseitig des zweiten Strömungsweges des Wärmetauschers ist im Strömungsweg des erwärmten Brauchwassers vorzugsweise ein Temperatursensor angeordnet und die Steuereinheit ist derart ausgebildet, dass sie die Drehzahl der das Heizmedium fördernden Umwälzpumpe in Abhängigkeit der von dem Temperatursensor erfassten Brauchwassertemperatur vorgibt. So kann die Brauchwassertemperatur optimal geregelt werden, da die Isttemperatur direkt an der Ausgangsseite des Wärmetauschers erfasst wird und die Heizmediumzufuhr durch entsprechende Drehzahlregelung der Umwälzpumpe so angepasst werden kann, dass schnell die gewünschte Temperatur erreicht wird.

Die Steuereinheit ist weiter bevorzugt derart ausgestaltet, dass die von dem Temperatursensor erfasste Brauchwassertemperatur als Regelgröße in einen Regelkreis eingeht, in welchem die Drehzahl der Umwälzpumpe eine durch einen Regler veränderbare Stellgröße bildet. Die Drehzahlregelung der Umwälzpumpe erfolgt in der Steuereinheit bevorzugt über einen Regler, welchem als Regeldifferenz die Differenz zwischen der von dem Temperatursensor erfassten Isttemperatur und einer Solltemperatur zugeführt wird.

Eingangsseitig des ersten Strömungsweges des Wärmetauschers ist in einem Strömungsweg für das Heizmedium ein Temperatursensor zum Erfassen der Temperatur des Heizmediums angeordnet und die Steuereinheit ist derart ausgebildet, dass sie die Drehzahl der das Heizmedium fördernde Umwälzpumpe in Abhängigkeit einer von dem Temperatursensor erfassten Heizmediumtemperatur vorgibt. D. h. in die Regelung fließt nicht nur die Isttemperatur des Brauchwassers ein sondern auch die Isttemperatur des in den Wärmetauscher einfließenden Heizmediums. Durch Berücksichtigung der Heizmediumtemperatur lässt sich eine noch schnellere Regelung der Ausgangstemperatur des erwärmten Brauchwassers erreichen, da die Pumpendrehzahl in Abhängigkeit der Heizmediumtemperatur so angepasst werden kann, dass Schwankungen der Heizmediumtemperatur direkt berücksichtigt werden können, ohne zunächst den Einfluss auf die Isttemperatur des erwärmten Brauchwassers abzuwarten.

Ein- oder ausgangsseitig des zweiten Strömungsweges des Wärmetauschers ist in dem Strömungsweg des Brauchwassers ein Durchflusssensor angeordnet und die Steuereinheit ist derart ausgebildet, dass sie die Drehzahl der das Heizmedium fördernden Umwälzpumpe in Abhängigkeit eines von dem Durchflusssensor erfassten Brauchwasservolumenstromes vorgibt. Wie oben beschrieben, hat auch der Brauchwasservolumenstrom einen direkten Einfluss auf die Brauchwassertemperatur. Bei gleicher zugeführter Wärmemenge wird bei geringerem Brauchwasservolumenstrom eine höhere Temperatur erreicht, als bei einem höheren Brauchwasservolumenstrom. Dadurch, dass dieser Volumenstrom direkt erfasst wird und in die Regelung bzw. Steuerung der Drehzahl der Umwälzpumpe für das Heizmedium einfließt, kann auch dieser Einfluss des Brauchwasser-Volumenstroms in der Regelung bzw. Steuerung schneller kompensiert werden, als wenn zunächst der Einfluss auf die Isttemperatur des Brauchwassers abgewartet würde und erst dann die Drehzahl der Umwälzpumpe entsprechend nachgeregelt würde. Durch die Berücksichtigung des Brauchwasser-Volumenstroms kann somit die gewünschte Brauchwassertemperatur ausgangsseitig des Wärmetauschers bei Inbetriebnahme der Brauchwassererwärmungseinheit oder bei einer Änderung des Brauchwasser-Volumenstromes schneller erreicht werden. Ferner kann insbesondere bei geringen Brauchwasser-Volumenströmen eine Überhitzung des Brauchwassers mit einer Verbrühungsgefahr für den Nutzer verhindert werden, indem direkt die Drehzahl der Umwälzpumpe so reduziert wird, dass nur eine reduzierte Menge von Heizmedium dem Wärmetauscher zugeführt wird, entsprechend dem erfassten Brauchwasser-Volumenstrom.

Für die Berücksichtigung der Heizmeidumtemperatur und/oder des Brauchwasservolumenstromes können in der Steuereinheit Kennlinien bzw. Kennfelder hinterlegt sein, welche die Abhängigkeit der einzustellenden Umwälzpumpendrehzahl von der Heizmediumtemperatur bzw. dem Brauchwasser-Volumenstrom vorgeben. In Abhängigkeit der erfassten Größen, wählt die Steuereinheit dann die entsprechende Drehzahl aus diesen Kennlinien bzw. Kennfeldern aus und stellt die Drehzahl der Umwälzpumpe entsprechend ein. Die genauere Regelung der Brauchwassertemperatur erfolgt dann durch Erfassung der Brauchwassertemperatur an der Ausgangsseite des Wärmetauschers und entsprechender Nachregelung der Drehzahl der Umwälzpumpe.

Zur Berücksichtigung des Einflusses des Brauchwasser-Volumenstromes und/oder der Heizmediumtemperatur weist die Steuereinheit weiter bevorzugt einen Regler mit Störgrößenaufschaltung (feedforward control) auf, wobei die von dem Temperatursensor erfasste Heizmediumtemperatur und/oder der von dem Durchflusssensor erfasste Brauchwasser-Volumenstrom als Störgrößen aufgeschaltet werden. Auf diese Weise können die Heizmediumtemperatur und der Brauchwasser-Volumenstrom in die Regelung der Drehzahl der Umwälzpumpe einfließen.

Erfindungsgemäß ist die Steuereinheit zumindest teilweise, weiter bevorzugt vollständig, in die Steuerelektronik der Umwälzpumpe integriert. Dies hat den Vorteil, dass für die Steuereinheit keine zusätzliche Baugruppe erforderlich ist, welche in der Brauchwassererwärmungseinheit zu montieren und gegebenenfalls anzuschließen wäre. Durch die direkte Integration in die Umwälzpumpe bzw. das Umwälzpumpenaggregat wird somit die Montage und Inbetriebnahme der Brauchwassererwärmungseinheit vereinfacht. An der Umwälzpumpe bzw. an deren Klemmenkasten bzw. Elektronikgehäuse sind weiter bevorzugt Bedienelemente und gegebenenfalls Anzeigeelemente vorgesehen, über welche auch die Voreinstellungen für die Brauchwasser-erwärmung vorgenommen werden können, insbesondere eine Solltemperatur für das Brauchwasser eingestellt werden kann. Alternativ oder zusätzlich ist es denkbar, dass die Steuereinheit eine Kommunikationsschnittstelle, beispielsweise eine Infrarot- oder Funkschnittstelle aufweist, über welche die Voreinstellungen mittels einer Fernbedienung vorgenommen werden können. Auch die Einbindung in eine übergeordnete Steuerung bzw. Anlagen-automatisation, über welche Grundeinstellungen, wie insbesondere die Brauchwasser-Solltemperatur, vorgegeben werden, wäre mittels einer geeigneten Schnittstelle in der Steuereinheit möglich.

Gegenstand der Erfindung ist darüber hinaus ein System zur Brauchwassererwärmung mit zumindest zwei Brauchwassererwärmungseinheiten. In diesem System sind die zumindest zwei Brauchwassererwärmungseinheiten kaskadenartig parallel geschaltet, um einen größeren Brauchwasserbedarf befriedigen zu können, d. h. einen größeren Brauchwasser-Volumenstrom mit der gewünschten Brauchwassertemperatur bereitstellen zu können. Die Anordnung zweier oder mehrerer parallel geschalteter Brauchwassererwärmungseinheiten hat dabei den Vorteil, dass mit ein und derselben Brauchwassererwärmungseinheit unterschiedlich groß dimensionierte Systeme, je nach der Größe des maximalen Brauchwasserbedarfs in einem Gebäude, geschaffen werden können, ohne unterschiedlich groß dimensionierte Brauchwassererwärmungseinheiten bereitstellen zu müssen. Die Anpassung erfolgt nur durch Variation der Anzahl der Brauchwassererwörmungseinheiten.

Darüber hinaus sind die Steuereinheiten der Brauchwassererwärmungseinheiten derart ausgebildet, dass bei einer Brauchwasseranforderung zunächst eine der Brauchwassererwärmungseinheiten in Betrieb genommen wird und nach Bedarf eine oder mehrer Brauchwassererwärmungseinheiten zugeschaltet werden. Dies ist dann von Vorteil, wenn der Brauchwasserbedarf stark schwankend ist, da dann nicht jedes Mal eine Brauchwassererwärmungseinheit in Betrieb genommen werden muss, welche auf den maximalen Bedarf an erwärmten Brauchwasser ausgelegt ist. Erfindungsgemäß werden vielmehr mehrere kleinere Brauchwassererwärmungseinheiten flexibel zugeschaltet, sodass die einzelnen Brauchwassererwärmungseinheiten vorzugsweise optimal ausgenutzt werden. Dadurch wird die Energieausnutzung optimiert, da sich über die kleinere Brauchwassererwärmungseinheiten eine genauere Regelung der Wärmezufuhr realisieren lässt.

Die Steuereinheiten sind zweckmäßigerweise derart ausgebildet, dass eine weitere Brauchwassererwärmungseinheit dann zugeschaltet wird, wenn die das Heizmedium fördernde Umwälzpumpe einer zuerst in Betrieb genommenen Brauchwassererwärmungseinheit eine vorbestimmte Drehzahl oder Durchflussmenge erreicht. Diese vorbestimmte Drehzahl kann die Maximaldrehzahl oder eine Grenzdrehzahl unterhalb der Maximaldrehzahl sein. Entsprechend kann die vorbestimmte Durchflussmenge die maximale Durchflussmenge oder eine Grenzdurchflussmenge unterhalb der maximalen Durchflussmenge sein. Diese kann aus der Drehzahl der Umwälzpumpe bestimmt werden oder durch einen Durchflusssensor erfasst werden. Diese Maximaldrehzahl oder Grenzdrehzahl bzw. Grenzdurchfluss ist die Drehzahl bzw. der Durchfluss, bei welcher die Brauchwassererwärmungseinheit das Maximum ihrer Leistungsfähigkeit erreicht oder in die Nähe des Maximums der Leistungsfähigkeit kommt. Das bedeutet, die Brauchwassererwärmungseinheit ist dann im Wesentlichen nicht mehr in der Lage einen größeren Brauchwasser-Volumenstrom auf dieselbe Solltemperatur zu erwärmen. Dies ist dann der Zeitpunkt, zu dem sinnvollerweise eine weitere Brauchwassererwärmungseinheit zugeschaltet wird, um einen größeren Brauchwasser-Volumenstrom derselben Solltemperatur liefern zu können.

Besonders bevorzugt sind die Steuereinheiten derart ausgestaltet, dass eine der Brauchwassererwärmungseinheiten eine Führungsfunktion in dem System in der Weise übernimmt, dass bei einer Brauchwasseranforderung zunächst die führende Brauchwassererwärmungseinheit in Betrieb genommen wird und deren Steuereinheit eine oder mehrere weitere Brauchwassererwärmungseinheiten nach Bedarf zuschaltet. Dies bedeutet, in dem System wird vorzugsweise auf eine übergeordnete Steuerung der Brauchwassererwärmungseinheiten verzichtet. Die Steuereinheiten der einzelnen Brauchwassererwärmungseinheiten übernehmen vielmehr auch die Koordination der Brauchwassererwärmungseinheiten untereinander, d. h. sie steuern selbsttätig oder durch Kommunikation untereinander, welche der Brauchwassererwärmungseinheiten zuerst in Betrieb genommen wird und welche Brauchwassererwärmungseinheiten gegebenenfalls bei einem größeren geforderten Brauchwasser-Volumenstrom zugeschaltet werden. Zu dieser Koordination sind die Steuereinheiten so ausgebildet, dass stets eine Steuereinheit eine Führungsfunktion übernimmt und das Gesamtsystem und insbesondere das Zuschalten weiterer Brauchwassererwärmungseinheiten steuert. Die Steuereinheiten sind dabei so ausgestaltet, dass die die Führungsfunktion aufweisende Brauchwassererwärmungseinheit, d. h. die führende Brauchwassererwärmungseinheit diejenige Brauchwassererwärmungseinheit ist, welche bei einer Brauchwasseranforderung zuerst den Betrieb aufnimmt. Sollte diese Brauchwassererwärmungseinheit an ihre Leistungsgrenze kommen, was, wie oben beschrieben, durch Erreichen einer Grenzdrehzahl oder Maximaldrehzahl der Umwälzpumpe für das Heizmedium gekennzeichnet ist, kann die Steuereinheit der führenden Brauchwassererwärmungseinheit eine weitere Brauchwassererwärmungseinheit zuschalten. Die Steuereinheit der führenden Brauchwassererwärmungseinheit ist dazu so ausgestaltet, dass sie bei Bedarf an die Steuereinheit einer weiteren Brauchwassererwärmungseinheit ein Einschaltsignal sendet, welches die Steuereinheit der zweiten bzw. weiteren Brauchwassererwärmungseinheit dann veranlasst den Betrieb dieser Brauchwassererwärmungseinheit aufzunehmen. Entsprechend kann in umgekehrter Weise das Ausschalten einzelner Brauchwassererwärmungseinheiten erfolgen, wenn sich der Brauchwasser-Volumenstrom verringert oder beispielsweise die Heizmediumtemperatur erhöht. Dies würde dann bei der oben beschriebenen Regelung dazu führen, dass die Drehzahl der Umwälzpumpe für das Heizmedium reduziert wird. Sollte diese dann unter einen vorbestimmten unteren Grenzwert fallen, kann die Steuereinheit das Ausschalten zuvor zugeschalteten Brauchwassererwärmungseinheit veranlassen.

Die Steuereinheiten sind weiter bevorzugt derart ausgestaltet, dass nach dem Zuschalten zumindest einer weiteren Brauchwassererwärmungseinheit die Führungsfunktion zu einer zugeschalteten Brauchwassererwärmungseinheit wechselt. Dabei kann die Führungsfunktion beispielsweise zu der letzten zugeschalteten Brauchwassererwärmungseinheit oder auch zu der als erste zugeschalteten Brauchwassererwärmungseinheit, d. h. der zweiten gleichzeitig in Betrieb genommenen Brauchwassererwärmungseinheit wechseln. Dieser Wechselrhythmus kann in den Steuereinheiten fest vorgegeben sein oder beispielsweise von diesen auch in Abhängigkeit der Laufzeit der einzelnen Brauchwassererwärmungseinheiten aktuell bestimmt werden. Dies kann direkt beim Zuschalten der weiteren Brauchwassererwärmungseinheit erfolgen oder aber auch erst bei einem nachfolgenden Ausschalten dieser Brauchwassererwärmungseinheit. Hierzu ist es vorgesehen, dass alle Steuereinheiten der mehreren Brauchwassererwärmungseinheiten identisch ausgebildet sind, sodass vorzugsweise jede der Brauchwassererwärmungseinheiten die Führungsfunktion übernehmen kann. Durch den Wechsel der Führungsfunktion wird erreicht, dass die einzelnen Brauchwassererwärmungseinheiten sich in ihrer Einschaltreihenfolge abwechseln, d. h. es wird nicht stets dieselbe Brauchwassererwärmungseinheit zuerst in Betrieb genommen. Auf diese Weise wird eine gleichmäßige Nutzung der Brauchwassererwärmungseinheiten erreicht.

Gemäß einer weiteren bevorzugten Ausführungsform sind die Steuereinheiten derart ausgestaltet, dass die Reihenfolge, in welcher die einzelnen Brauchwassererwärmungseinheiten bei Bedarf zugeschaltet werden, in Abhängigkeit der Laufzeit der einzelnen Brauchwassererwärmungseinheiten so gewählt wird, dass eine gleichmäßige Nutzung der einzelnen Brauchwassererwärmungseinheiten erreicht wird. Beispielsweise können die Betriebsstunden der Brauchwassererwärmungseinheiten jeweils in der zugehörigen Steuereinheit erfasst werden und die Steuereinheiten so ausgebildet sein, dass sie durch Kommunikation untereinander dafür Sorge tragen, dass die Startreihenfolge so gewählt wird, dass eine gleichmäßige Nutzung der Brauchwassererwärmungseinheiten realisiert wird.

Damit die Brauchwassererwärmungseinheiten bzw. deren Steuereinheiten untereinander kommunizieren können, sind die Steuereinheiten mit geeigneten Kommunikationsschnittstellen, vorzugsweise Funkschnittstellen ausgestaltet. Dies vereinfacht die Installation und Inbetriebnahme da keine Datenleitungen zwischen den Steuereinheiten angeschlossen werden müssen. Die Steuereinheiten müssen lediglich über in diesen vorgesehene Prozeduren über Funk miteinander gekoppelt werden, sodass sie sich finden und erkennen, um dann miteinander kommunizieren zu können. Dies kann durch geeignete Programmabläufe in den Steuereinheiten realisiert werden.

Weiter bevorzugt sind die Steuereinheiten derart ausgestaltet, das eine defekte Brauchwassererwärmungseinheit von der Zuschaltung bei Bedarf ausgenommen wird. Dadurch wird eine hohe Betriebssicherheit erreicht, da stets nur funktionstüchtige Brauchwassererwärmungseinheiten in Betrieb genommen werden und so die Brauchwassererwärmung auch bei Defekt einer Brauchwassererwärmungseinheit sichergestellt ist.

Gemäß einer besonderen Ausführungsform des Systems kann eine der mehreren Brauchwassererwärmungseinheiten eine zweite Umwälzpumpe als Zirkulationspumpe für erwärmtes Brauchwasser aufweisen, wobei die Steuereinheiten vorzugsweise derart ausgebildet sind, dass die Brauchwassererwärmungseinheit mit der Zirkulationspumpe nur in einem Zirkulationsbetrieb oder bei maximaler Last des Systems in Betrieb genommen wird. Die Brauchwasserzirkulation dient in bekannter Weise dazu, das erwärmte Brauchwasser im Leitungssystem eines Gebäudes stetig umzuwälzen, sodass an den Zapfstellen stets direkt warmes Brauchwasser zur Verfügung steht. Vorzugsweise ist das dazu erforderliche Zirkulationsmodul, insbesondere eine Zirkulationspumpe, nur in einer der mehreren Brauchwassererwärmungseinheiten vorgesehen. Um das Brauchwasser bei der Zirkulation zu erwärmen ist in der Regel nur eine geringe Wärmemenge erforderlich, welche in einem solchen System von einer Brauchwassererwärmungseinheit allein geliefert werden kann. Es ist jedoch auch denkbar, mehrere der Brauchwassererwärmungseinheiten mit entsprechenden Zirkulationspumpen bereitzustellen, beispielsweise auch um eine Ausfallsicherheit der Zirkulation zu gewährleisten. Die Brauchwassererwärmungseinheiten mit Zirkulationspumpe bzw. Zirkulationsmodul dienen vorzugsweise nur der Erwärmung des Brauchwassers bei der Zirkulation und werden in dem System bei maximaler Last zugeschaltet. D. h. die Brauchwassererwärmungseinheiten mit Zirkulationspumpe haben in der Startreihenfolge eine der letzten Positionen. Auch dies wird vorzugsweise durch Kommunikation der jeweiligen Steuereinheiten untereinander ohne Verwendung einer übergeordneten Steuerung eingestellt. Die Steuereinheiten sind dazu so ausgestaltet, dass sie die Brauchwassererwärmungseinheiten mit Zirkulationsmodul erkennen. D. h. die Steuereinheiten der entsprechenden Brauchwassererwärmungseinheiten signalisieren, dass sie ein Zirkulationsmodul aufweisen. Dies wird insbesondere von der Steuereinheit der führenden Brauchwassererwärmungseinheit erfasst, welche dies bei Einstellen der Startreihenfolge berücksichtigt und die entsprechenden Brauchwassererwärmungseinheiten mit Zirkulationsmodul an die letzte Stelle der Startreihenfolge setzt. Gleichzeitig berücksichtigt die führende Steuereinheit diesen Umstand in der Weise, dass sie die Führungsfunktion nicht an eine Steuereinheit einer Brauchwassererwärmungseinheit mit Zirkulationsmodul abgibt. D. h. vorzugsweise übernimmt eine Brauchwassererwärmungseinheit mit Zirkulationspumpe keine Führungsfunktion in dem System.

Nachfolgend wird die Erfindung beispielhaft anhand der beigefügten Figuren beschrieben. In diesen zeigt:
- Fig. 1: eine Gesamtansicht einer an einem Wärmespeicher angeordneten Brauchwassererwärmungseinheit,
- Fig. 2: eine perspektivische Gesamtansicht der Brauchwassererwärmungseinheit gemäß Fig. 1,
- Fig. 3: eine perspektivische Ansicht des Wärmetauschers mit einer Anschlussarmatur,
- Fig. 4: eine Schnittansicht der Brauchwassererwärmungseinheit gemäß Fig. 2,
- Fig. 5, 6: eine Brauchwassererwärmungseinheit gemäß Fig. 1, 2 und 4 ohne Brauchwasserzirkulationsmodul,
- Fig. 7: eine perspektivische Explosionsansicht der Brauchwassererwärmungseinheit mit Brauchwasserzirkulationsmodul,
- Fig. 8: eine perspektivische Ansicht der Brauchwassererwärmungseinheit mit montiertem Brauchwasserzirkulationsmodul,
- Fig. 9: schematisch die Strömungswege im Inneren des Wärmetauschers gemäß Fig. 3,
- Fig.: 10 den Temperaturverlauf im Inneren des Wärmetauschers über den Strömungsweg,
- Fig. 11: ein hydraulisches Schaltbild einer Brauchwassererwärmungseinheit,
- Fig. 12: den Temperaturverlauf, welcher von einem Temperatursensor im Kaltwassereingang der Brauchwassererwärmungseinheit erfasst wird,
- Fig. 13: schematisch die Datenübertragung von den Sensoren zu einer Steuereinrichtung,
- Fig. 14: die Anordnung mehrerer Brauchwassererwärmungseinheiten 2 in einer Kaskadenanordnung,
- Fig. 15: schematisch die Steuerung der mehreren Brauchwassererwärmungseinheiten gemäß Fig. 14 und
- Fig. 16: schematisch den Regelkreis zur Regelung der Brauchwassererwärmungseinheiten.

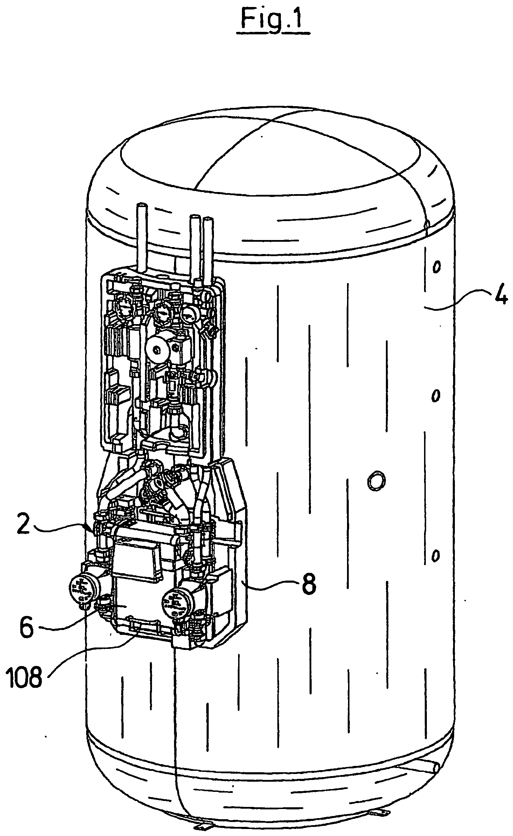

Die als Beispiel gezeigte Wärmetauschereinheit ist eine Brauchwassererwärmungseinheit 2 und zur Verwendung in einer Heizungsanlage vorgesehen. Im hier gezeigten Beispiel (Fig. 1) ist die Brauchwassererwärmungseinheit 2 an einem Wärmespeicher 4, beispielsweise einem Wasserspeicher, welcher von einer Solaranlage erwärmtes Heizungswasser speichert, angebracht. Aus dem Wärmespeicher 4 wird der Wärmetauscher 6 der Brauchwassererwärmungseinheit 2 mit Heizmedium zum Erwärmen von Brauchwasser versorgt. In Fig. 1 ist ein die Brauchwassererwärmungseinheit 2 umgebendes Gehäuse geöffnet dargestellt, d. h. der Frontdeckel ist abgenommen. In den übrigen Figuren ist die Brauchwassererwärmungseinheit 2 ohne umgebendes Gehäuse dargestellt.

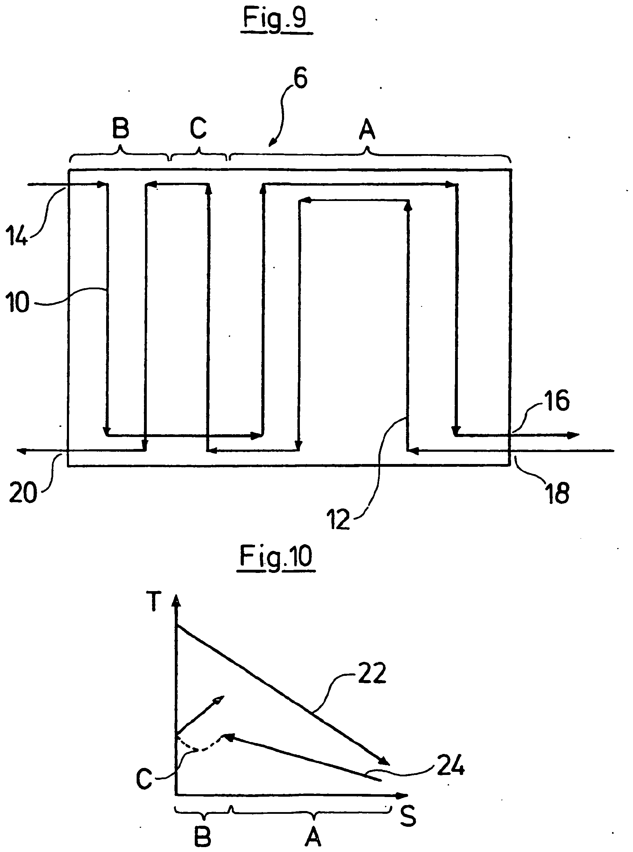

Zentraler Bestanteil der Wärmetauschereinheit bzw. Brauchwassererwärmungseinheit 2 ist ein Wärmetauscher 6 in Form eines Plattenwärmetauschers. Über den Wärmetauscher 6 wird zu erwärmendes Brauchwasser erwärmt und als erwärmtes Brauchwasser abgegeben, beispielsweise um in einem Haus Zapfstellen 7 an Waschbecken, Duschen, Badewannen etc. mit warmem Brauchwasser zu versorgen. Um das Brauchwasser zu erwärmen, wird der Wärmetauscher mit Heizmedium versorgt. Er weist in seinem Inneren zwei Strömungswege auf, wie schematisch in Fig. 9 dargestellt. Ein erster Strömungsweg 10 ist der Strömungsweg, durch welchen das Heizmedium durch den Wärmetauscher geführt wird. Der zweite Strömungsweg 12 ist der Strömungsweg, durch welchen das Brauchwasser durch den Wärmetauscher geleitet wird. Beide Strömungswege sind in bekannter Weise durch Platten voneinander getrennt, über welche ein Wärmeübergang von dem Heizmedium zu dem Brauchwasser möglich ist.

Die beiden äußeren Platten 13 des Plattenstapels bilden zwei einander entgegengesetzte Seitenflächen des Wärmetauschers 6. An diesen Seitenflächen sind die Fluidanschlüsse 14 bis 20 des Wärmetauschers 6 ausgebildet und werden, wie nachfolgend beschreiben, Anschlussarmaturen befestigt.

Durch den Eingang 14 tritt das Heizmedium in den Wärmetauscher 6 und durch den Ausgang 16 wieder aus. Das zu erwärmende Brauchwasser tritt an dem Eingang 18 in den Wärmetauscher 6 ein und an dem Ausgang 20 aus dem Wärmetauscher wieder aus. Wie in Fig. 9 schematisch dargestellt, ist der Wärmetauscher in drei Abschnitt A, B, C geteilt. In Strömungsrichtung des Brauchwassers durch den zweiten Strömungsweg 12 bildet der Abschnitt A einen ersten Abschnitt, in welchem der erste Strömungsweg 10 und der zweite Strömungsweg 12 im Gegenstrom aneinander vorbeigeführt sind. D. h. das zu erwärmende Brauchwasser und das Heizmedium strömen in entgegengesetzten Richtungen an den sie trennenden Platten des Wärmetauschers vorbei. Dies hat den Effekt, dass das kalte Brauchwasser, welches am Eingang 18 in den Wärmetauscher 6 eintritt, zunächst von dem bereits angekühlten am Ausgang 16 austretenden Heizmedium erwärmt wird und dann in Strömungsrichtung in die Nähe von immer wärmeren Heizmedium kommt. Der Wärmetauscher 6 weist einen zweiten Abschnitt B auf, in welchem der erste Strömungsweg 10 und der zweite Strömungsweg 12 dann nicht mehr in Gegenstromanordnung relativ zu einander geführt sind, sondern in einer Mitstromanordnung geführt sind, d. h. die Strömungen in dem ersten Strömungsweg 10 und im zweiten Strömungsweg 12 verlaufen gleichgerichtet zueinander in derselben Richtung entlang der sie trennenden Platten oder anderer sie trennender wärmeleitender Trennelemente.

Zwischen dem ersten Abschnitt A und dem zweiten Abschnitt B ist ein Umkehrabschnitt C ausgebildet, in welchem die relative Umkehr der Strömungsrichtungen in den Strömungswegen zueinander realisiert ist. Im hier gezeigten Beispiel sind die Abschnitte A, B und C des Wärmetauschers in einen Wärmetauscher integriert. Es ist jedoch zu verstehen, dass die Abschnitte A und B auch in separaten Wärmetauschern ausgebildet werden könnten und die Richtungsumkehr der Strömungen zueinander im Abschnitt C durch eine entsprechende Verrohrung der beiden Wärmetauscher realisiert werden könnte.

Durch die Umkehr zum Mitstromprinzip wird erreicht, dass eine Überhitzung des Brauchwassers verhindert wird, da das am Ausgang 20 austretenden erwärmte Brauchwasser im letzten Abschnitt seines Strömungsweges 12 nicht direkt durch das am Eingang 14 eintretenden heiße Heizmedium erwärmt wird, sondern durch bereits etwas abgekühltes Heizmedium. Dadurch ist die maximal zu erreichende Brauchwassertemperatur begrenzt. Dies ist in Fig. 10 zu erkennen. In dem in Fig. 10 gezeigten Diagramm ist die Temperatur T des Heizmediums als Kurve 22 über dem Weg s aufgetragen und die Temperatur T des Brauchwassers als Kurve 24 über dem Weg s aufgetragen. Es ist zu erkennen, dass der Austritt des Brauchwassers nicht im Bereich der höchsten Temperatur des eintretenden Heizmediums liegt, insofern kann maximal eine Temperatur erreicht werden, welche auf dem Niveau der Temperatur des Heizmediums im Bereich des Ausgangs 20 des Brauchwasser aus dem Wärmetauscher liegt.

An dem Plattenwärmetauscher 6 sind der Eingang 14 für das Heizmedium, der Ausgang 16 für das Heizmedium, der Eingang 18 für das zu erwärmende Brauchwasser sowie der Ausgang 20 für das erwärmte Brauchwasser als Fluidanschlüsse ausgebildet, an welchen wiederum Anschlussarmaturen angesetzt sind, welche die Verbindung zu weiteren Bauteilen und Rohrleitungen herstellen. An den Ausgang 20 für das erwärmte Brauchwasser ist eine erste Anschlussarmatur 26 angesetzt. Diese Anschlussarmatur weist ein Basiselement 28 auf, welches in identischer Ausgestaltung in der zweiten Anschlussarmatur 30 lediglich um 180° gedreht an den den Ausgang 16 und den Eingang 18 bildenden Fluidanschlüssen des Wärmetauschers 6 angesetzt ist. Dies hat den Vorteil, dass ein und dasselbe Basiselement 28 als erste Anschlussarmatur und als zweite Anschlussarmatur eingesetzt werden kann und die Teilevielfalt reduziert werden kann.

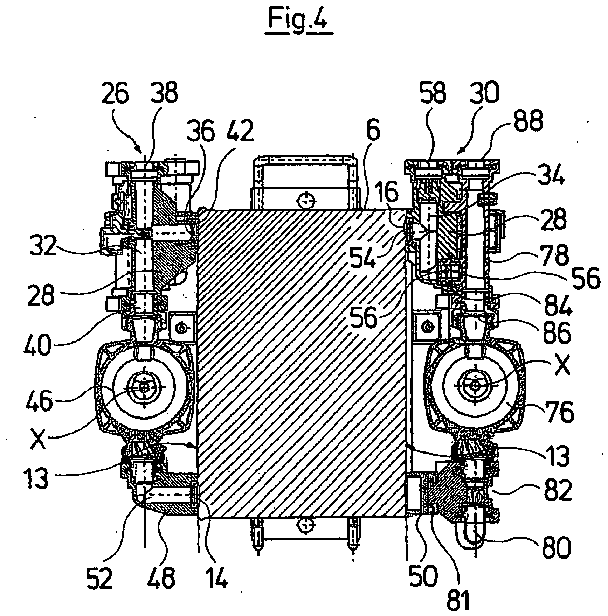

In dem Basiselement 28 sind zwei voneinander getrennte Strömungskanäle 32 und 34 ausgebildet. Der Strömungskanal 32 ist T-förmig ausgebildet und mündet zu drei Anschlussöffnungen 36, 38 und 40 (siehe Schnittansicht in Fig. 4). Bei Verwendung des Basiselementes 28 als erste Anschlussarmatur 26 ist die Anschlussöffnung 36 ungenutzt und durch die Wandung des Wärmetauschers 6 verschlossen, wobei zwischen dem Basiselement 28 und der Wandung des Wärmetauschers 6 an der Anschlussöffnung 38 eine Dichtung 42 zur Abdichtung angeordnet ist. Die Anschlussöffnung 38 bildet den Anschluss zur Verbindung mit einer Zufuhrleitung 44, welche mit dem Wärmespeicher 4 zur Zufuhr von heißem Heizmedium verbunden ist. An der entgegengesetzt gelegenen Anschlussöffnung 40 des Strömungskanals 32 ist an dem Basiselement 28 bei Verwendung in der ersten Anschlussarmatur 26 eine erste Umwälzpump 46 angeordnet, welche das Heizmedium dem Eingang 14 des Wärmetausches 6 zuführt. Dazu ist an dem Eingang 14 eine dritte Anschlussarmatur 48 angeordnet, welche in identischer Ausgestaltung lediglich um 180° gedreht an der entgegengesetzten Seite des Wärmetauschers 6, wie weiter unten beschrieben, als vierte Anschlussarmatur 50 angeordnet werden kann. D. h. auch die dritte Anschlussarmatur 48 und die vierte Anschlussarmatur 50 werden zumindest aus einem identischen Basiselement gebildet.

In der dritten Anschlussarmatur 48 ist ein Strömungskanal 52 ausgebildet, welcher den Druckstutzen der Umwälzpumpe 46 mit dem Eingang 14 des Wärmetauschers verbindet.

Der zweite Strömungskanal 34 in dem Basiselement 28 ist, wie in der Schnittansicht anhand der zweiten Anschlussarmatur 30 zu erkennen ist, ebenfalls T-förmig ausgebildet und weist drei Anschlussöffnungen 54, 56 und 58 auf. In der ersten Anschlussarmatur 26 ist die Anschlussöffnung 58 des zweiten Strömungskanals 34 verschlossen, z. B. durch einen eingesetzten Stopfen. Die Anschlussöffnung 54 ist mit dem Ausgang 20 des Wärmetauschers 6 verbunden, wobei ebenfalls eine Dichtung 42 zwischen der Anschlussarmatur 26 und dem Wärmetauscher 6 angeordnet ist. An die Anschlussöffnung 56 des zweiten Strömungskanals 34 ist in der ersten Anschlussarmatur 26 Anschlussteil 60 angesetzt, welches die Anschlussöffnung 58 über einen im Inneren des Anschlussteils 60 ausgebildeten Strömungskanal mit dem Leitungsanschluss 62 verbindet. Der Leitungsanschluss 62 dient zur Verbindung mit einer Warmwasserleitung, durch die das erwärmte Brauchwasser abgeführt wird.

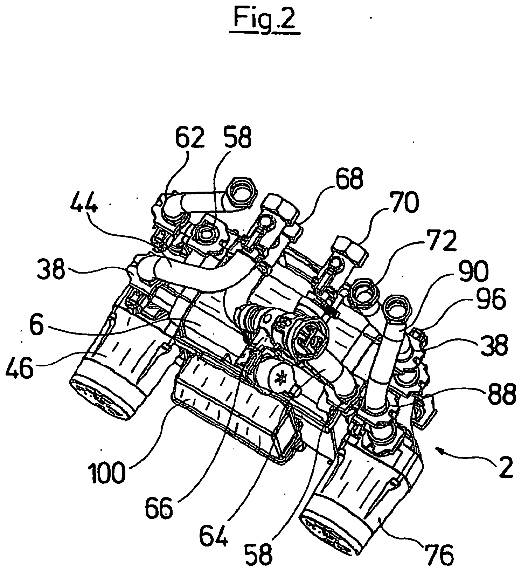

An der entgegengesetzten Seitenfläche des Plattenwärmetauschers 6, welcher die tragende Struktur der Brauchwassererwärmungseinheit bildet, ist das Basiselement 28 als zweite Anschlussarmatur 30 angesetzt. Durch die zweite Anschlussarmatur 30 werden der Ausgang 16 für das Heizmedium sowie der Eingang 18 für das kalte Brauchwasser mit der externen Installation verbunden. An den Ausgang 16 des Wärmetauschers schließt bei dieser um 180° gedrehten Anordnung des Basiselementes 28 die Anschlussöffnung 54 des zweiten Strömungskanals 34 an. Dieser zweite Strömungskanal 34 stellt eine Verbindung zu dem Leitungsanschluss bzw. der Anschlussöffnung 58 her, welche den Ausgang des abgekühlten Heizmediums bildet. An diese Anschlussöffnung 58 kann eine Leitung angeschlossen werden, welche das Heizmedium zurück in den Wärmespeicher 4 führt. Bei der in Fig. 2 gezeigten Ausführungsform, bei welcher gleichzeitig, wie unten beschrieben wird, eine Zirkulation des Brauchwasser vorgesehen ist, ist an die Anschlussöffnung 58 eine Leitung 64 angeschlossen, welche zu einem Umschaltventil 66 führt, welches wahlweise eine Verbindung der Leitung 64 zu den Anschlüssen 68 und 70 herstellt. Die Anschlüsse 68 und 70 dienen zu Verbindung mit dem Wärmespeicher 4, wobei diese Anschlüsse beispielsweise eine Verbindung zum Inneren des Wärmespeichers 4 an unterschiedlichen vertikalen Position herstellen kann, sodass je nach Temperatur des aus den Wärmetauscher 6 austretenden Heizmediums dieses durch Umschalten des Umschaltventils 66 an unterschiedlichen vertikalen Positionen in den Wärmespeicher 4 zurückgeführt werden kann, um eine dort vorhandene Schichtung des Heizmediums aufrechtzuerhalten. Die Umschaltfunktion ist insbesondere dann von Vorteil, wenn, wie unten beschrieben, ein Brauchwasserzirkulationsmodul 74 vorgesehen ist. Die Erwärmung des zirkulierten Brauchwassers erfordert einen geringeren Wärmebedarf, sodass dabei das Heizmedium mit höhere Temperatur in den Wärmespeicher 4 zurückströmt.

Der Strömungsweg 32 im Inneren des Basiselementes ist bei der zweiten Anschlussarmatur 30 mittels der Anschlussöffnung 36 mit dem Eingang 18 verbunden. An die Anschlussöffnung 38 wird eine Kaltwasserleitung 72 zur Zufuhr des kalten Brauchwassers angeschlossen. Durch diese Leitung tritt das kalte Wasser dann in den Eingang 18 in den Wärmetauscher ein.

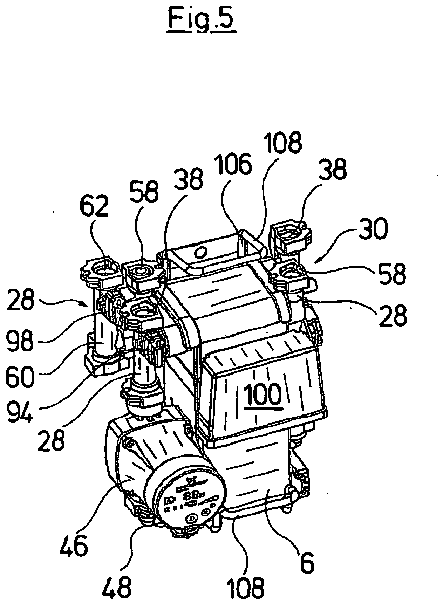

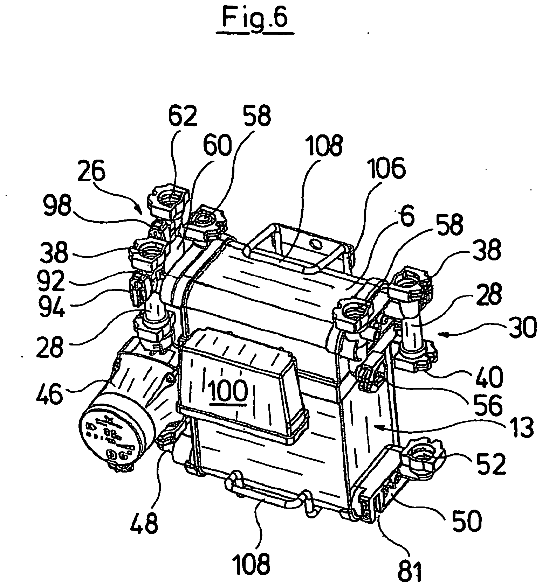

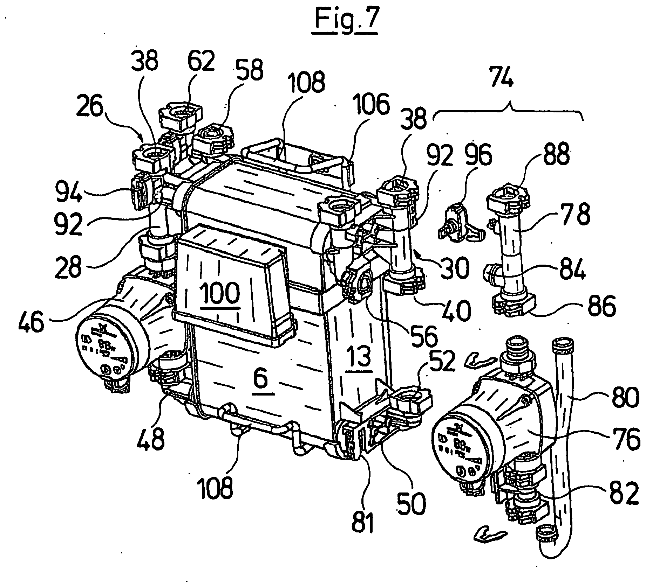

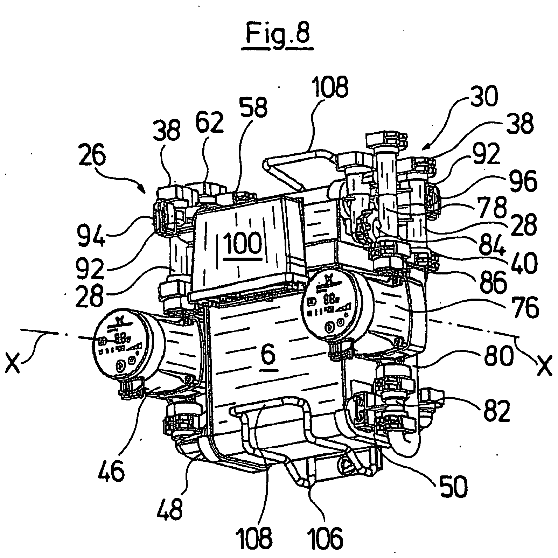

Die hier gezeigte Brauchwasserwärmungseinheit kann in zwei verschiedenen Ausführungsformen Verwendung finden, nämlich einmal mit einem Brauchwasserzirkulationsmodul 74 oder auch ohne dieses Brauchwasserzirkulationsmodul 74. In Fig. 1, 2, 4, 7 und 8 ist diese Brauchwasserzirkulationsmodul 74 an dem Wärmetauscher 6 angeordnet. Die Fig. 5 und 6 zeigen die Anordnung ohne das Brauchwasserzirkulationsmodul 74. Wenn das Brauchwasserzirkulationsmodul 74 nicht vorgesehen ist, ist die vierte Anschlussarmatur 50 nicht erforderlich und die Anschlussöffnung bzw. der Leitungsanschluss 40 des Basiselementes 28 der zweiten Anschlussarmatur 30 ist durch einen Stopfen verschlossen. Auch die Anschlussöffnung 56 des Strömungskanals 34 ist in diesem Fall durch einen Stopfen verschlossen.

Das Brauchwasserzirkulationsmodul 74 besteht aus einer zweiten Umwälzpumpe 76, welche der Zirkulation des Brauchwassers im Warmwasserleitungssystem eines Gebäudes dient. Zum Anschluss der zweiten Umwälzpumpe 76 sind ein Anschlussteil 78 und ein Rohr 80 vorgesehen. Zur Halterung der Pumpe 76 an dem Wärmetauscher 6 wird dazu am Ende einer Seitenfläche eine vierte Anschlussarmatur 50 angeordnet, welche identisch zu der dritten Anschlussarmatur 48 ist bzw. ein identisches Basiselement aufweist. Allerdings findet bei der Verwendung als vierte Anschlussarmatur 50 der Strömungskanal 52 keine Verwendung. An dem Basiselement der dritten und vierten Anschlussarmatur ist eine Aufnahme 81 ausgebildet, in welche ein Anschlusselement 82 eingesetzt wird, welches mit einem Druckstutzen der Umwälzpumpe 76 verbunden ist. Das Anschlusselement 82 weist in seinem Inneren einen Strömungskanal auf und stellt darüber eine Verbindung zu dem Rohr 80 her. Das Rohr 80 wird mit seinem dem Anschlusselement 82 abgewandten Ende mit der Anschlussöffnung 40 des Strömungskanals 32 in der zweiten Anschlussarmatur 30 verbunden, wobei die Anschlussöffnung 40 dann nicht durch einen Stopfen verschlossen ist. Auf diese Weise kann die als Zirkulationspumpe dienende Umwälzpumpe 46 einen Teil des erwärmten Brauchwassers zurück in den Strömungskanal 32 der zweiten Anschlussarmatur 30 und durch dessen Anschlussöffnung 36 in den Eingang 18 des Wärmetauschers zurückführen. D. h. im Strömungskanal 32 der zweiten Anschlussarmatur fließen zugeführten kaltes Brauchwasser durch die Anschlussöffnung 38 und durch die Zirkulationspumpe 76 zurückgefördertes Brauchwasser durch die Anschlussöffnung 40 zusammen.

Das Anschlussteil 48 ist auf das Basiselement 28 der zweiten Anschlussarmatur 30 so aufgesetzt, dass es mit einem verschlossenen Stutzen 84 in die Anschlussöffnung 56 des zweiten Strömungskanals 34 eingreift und so die Anschlussöffnung 56 verschließt, sodass zu deren Verschluss in der zweiten Anschlussarmatur 30 kein zusätzlicher Stopfen mehr erforderlich ist. Das Anschlussteil 78 ist im Übrigen rohrförmig ausgebildet und verbindet zwei an entgegengesetzten Enden gelegen Anschlussöffnungen 86 und 88. Der Stutzen 84 weist keine fluidleitende Verbindung zu der Verbindung zwischen den Leitungsanschlüssen bzw. Anschlussöffnungen 86 und 88 auf. Die Anschlussöffnung 86 ist mit dem Saugstutzen der zweiten Umwälzpumpe 76 verbunden und die Anschlussöffnung 88 bildet einen Anschluss, an welchen eine Zirkulationsleitung 90 angeschlossen wird. Durch Verwendung des Anschlussteiles 78 und einer vierten Anschlussarmatur 50, welche mit ihrem Basiselement identisch zu der dritten Anschlussarmatur 48 ausgebildet ist, kann somit mit wenigen zusätzlichen Teilen eine zweite Umwälzpumpe 76, welche eine Zirkulationspumpe darstellt, ebenfalls an dem als tragende Struktur dienenden Wärmetauscher 6 befestigt werden, und die Zirkulationsleitung über die Umwälzpumpe 46 direkt mit dem zweiten Strömungsweg 12 im Inneren des Wärmetauschers fluidleitend verbunden werden.

In dem Basiselement 28 der ersten und zweiten Anschlussarmaturen 26 und 30 ist im Strömungskanal 32 eine Sensoraufnahme 92 ausgebildet, welche zur Aufnahme eines Sensors dienen kann. Bei Verwendung des Basiselements 28 als zweite Anschlussarmatur 30 ist die Sensoraufnahme 92, wenn kein Brauchwasserzirkulationsmodul 74 angebracht ist, verschlossen. In der ersten Anschlussarmatur 26 ist in die Sensoraufnahme 92 ein Temperatursensor 94 eingesetzt, welcher die Temperatur des dem Wärmetauscher 6 zugeführten Heizmediums erfasst. Bei Verwendung des Brauchwasserzirkulationsmoduls 74 ist auch in die Sensoraufnahme 92 des Basiselementes 28 der zweiten Anschlussarmatur 30 ein Temperatursensor 96 eingesetzt, welcher zur Erfassung einer Brauchwasseranforderung dient und dessen spezielle Funktion weiter unten beschrieben wird. Darüber hinaus weist auch das Anschlussteil 60 eine Sensoraufnahme auf, in welcher ein Sensor 98 eingesetzt ist. Der Sensor 98 ist ein kombinierter Temperatur- und Strömungssensor, welcher die Temperatur und den Durchfluss des aus dem Ausgang 20 aus dem Wärmetauscher 6 durch den Strömungsweg 34 in der ersten Anschlussarmatur 26 austretenden erwärmten Brauchwassers erfasst. Es ist zu verstehen, dass auch die zuvor beschriebenen Temperatursensoren 94, 96 gegebenenfalls als kombinierte Temperatur- und Durchflusssensoren Verwendung finden könnten.

Durch den Sensor 98 kann zum einen die Temperatur des austretenden Brauchwassers erfasst werden und basierend auf dieser Temperatur und der von dem Temperatursensor 94 erfassten Temperatur des Heizmediums der erforderliche Volumenstrom des Heizmediums bestimmt werden und die erste Umwälzpumpe 46 entsprechend betrieben werden. Die dazu erforderliche Steuerung bzw. Regelung für die Umwälzpumpe 46 ist vorzugsweise als Regel- bzw. Steuerelektronik in die Umwälzpumpe 46 integriert.

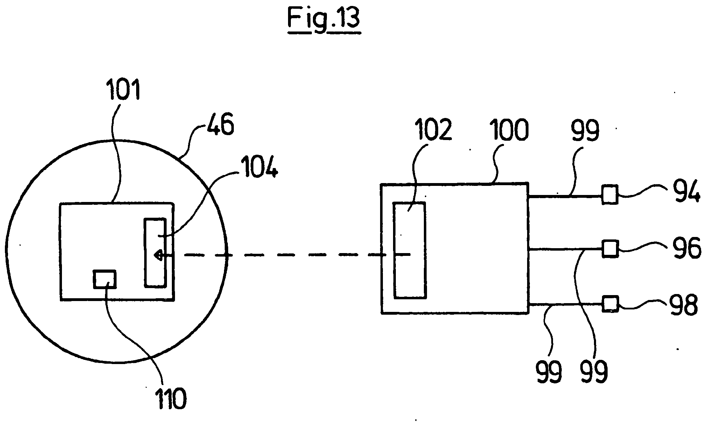

Die Sensoren 94, 96 und 98 sind über elektrische Leitungen 99 mit einer Sensorbox 100 verbunden, welche ein Datenerfassungsmodul bildet. Die Sensorbox 100 erfasst die von den Sensoren 94, 96 und 98 bereitgestellten Daten. Die Sensorbox 100 stellt die erfassten Daten, wie in Fig. 13 gezeigt, der Steuereinheit 101, welche in diesem Beispiel in die Steuerelektronik des Pumpenaggregates 46 integriert ist, zur Verfügung. In der Sensorbox 100 ist dazu eine Ausgabeschnittstelle 102 und in der Steuereinheit 101 eine korrespondierende Eingangschnittstelle 104 ausgebildet. Die Ausgabeschnittstelle 102 und die Eingangsschnittstelle 104 sind hier als Funkschnittellen ausgebildet, welche eine drahtlose Signalübertragung von der Sensorbox 100 zu der Steuereinheit 101 in dem Pumpenaggregat 46 ermöglichen. Dies ermöglicht einen sehr einfachen Anschluss des Pumpenaggregates 46 und auch der Sensoren 94, 96 und 98, da diese nicht direkt mit dem Pumpenaggregat 46 verbunden werden müssen. So können die Sensoren 94, 96 und 98 unabhängig von der Umwälzpumpe 46 angeschlossen und verdrahtet werden und die Umwälzpumpe 46 gegebenenfalls auch leicht ausgetauscht werden, ohne die Verkabelung der Sensoren zu beeinträchtigen. Die Steuereinheit 101 in der Umwälzpumpe 46 steuert bzw. regelt vorzugsweise nicht nur die Umwälzpumpe 46 sondern auch die Umwälzpumpe 76, wozu die Steuereinheit 101 in der Umwälzpumpe 46 vorzugsweise ebenfalls drahtlos über Funk mit der Umwälzpumpe 76 bzw. deren Steuereinrichtung kommunizieren kann. So können beide Umwälzpumpen 46 und 76 sehr leicht angeschlossen werden, da lediglich ein elektrischer Anschluss für die Netzstromversorgung erforderlich ist. Die gesamte Kommunikation für die Steuerung erfolgt drahtlos.

In dem Datenerfassungsmodul 100 bzw. der Sensorbox 100 kann auch bereits eine Signalaufbereitung der von den Sensoren 94, 96 und 98 gelieferten Signale erfolgen, um die erforderlichen Daten in einem vorbestimmten Format der Steuereinrichtung 101 zur Verfügung zu stellen. Die Steuereinheit 101 liest über die Eingangschnittstelle 104 bevorzugt nur die aktuell für die Steuerung benötigten Daten aus der Ausgabeschnittstelle 102 aus, sodass die Datenkommunikation auf ein Minimum beschränkt werden kann.

Die Steuereinheit 101 übernimmt vorzugsweise auch die Steuerung der Zirkulation, welche durch die Umwälzpumpe 76 bei Verwendung des Brauchwasserzirkulationsmoduls 74 bewirkt wird, in der Weise, dass die Umwälzpumpe 76 zur Zirkulation dann abgeschaltet wird, wenn der Temperatursensor 94 eine Temperatur des aus dem Wärmespeicher 4 zugeführten Heizmediums erfasst, welche unter einem vorbestimmten Grenzwert liegt. Auf diese Weise kann verhindert werden, dass der Wärmespeicher 4 aufgrund der Brauchwasserzirkulation übermäßig auskühlt und die Zirkulation kann stattdessen in Zeiten, in welchen die Wärmezufuhr zu dem Wärmespeicher 4, beispielsweise aufgrund fehlender Sonneneinstrahlung auf ein Solarmodul, zu gering ist, ausgesetzt werden.

Die Steuereinheit 101 steuert den Betrieb der Umwälzpumpe 46 in der Weise, dass die Umwälzpumpe 46 zunächst eingeschaltet wird, wenn ein Wärmebedarf zur Erwärmung des Brauchwassers gegeben ist, sodass Heizmedium von dem Wärmespeicher 4 dem Wärmetauscher 6 zugeführt wird. In dem Fall, dass kein Brauchwasserzirkulationsmodul 74 vorgesehen ist, wird dieser Wärmebedarf für das Brauchwasser über den kombinierten Temperaturdurchflusssensor 98 erfasst. Wenn dieser eine Strömung in dem Strömungsweg durch das Anschlussteil 60 erfasst, d. h. eine Brauchwasserströmung, heißt dies, dass eine Zapfstelle für warmes Brauchwasser geöffnet ist, sodass durch die Anschlussöffnung 38 kaltes Brauchwasser zuströmt und ein Wärmebedarf zur Erwärmung des Brauchwassers gegeben ist. So kann die Steuereinheit 101 die Umwälzpumpe 46 in diesem Fall in Betrieb nehmen.

Für den Fall, dass das Brauchwasserzirkulationsmodul 74 angeordnet ist, kann der Brauchwasserbedarf so nicht erfasst werden, da der Sensor 98 auch aufgrund der Zirkulation, welche von der zweiten Umwälzpumpe 76 verursacht wird, eine Strömung erfasst, wenn keine Zapfstelle für Brauchwasser geöffnet ist. In diesem Fall kann von dem Sensor 98 lediglich die Temperatur des aus dem Wärmetauscher 6 austretenden Brauchwassers erfasst werden und für den Fall, dass diese unter einem vorbestimmten Grenzwert liegt, die Umwälzpumpe 46 geschaltet werden, um die Wärmeverluste aufgrund der Zirkulation in der Weise auszugleichen, dass Heizmedium dem Wärmetauscher 6 zugeführt wird und so das zirkulierte Brauchwasser erwärmt wird.

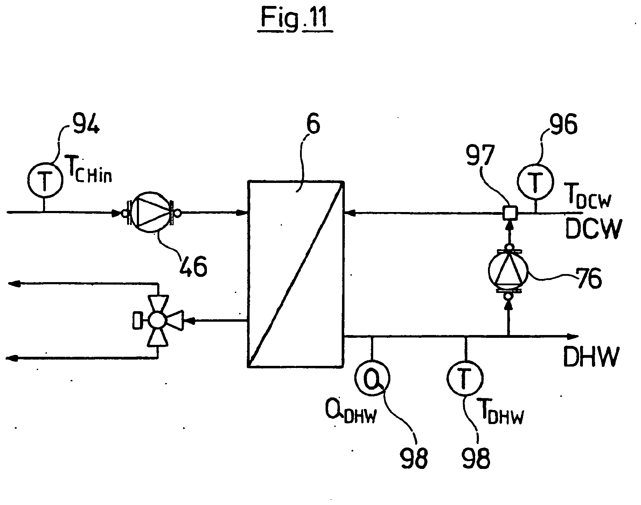

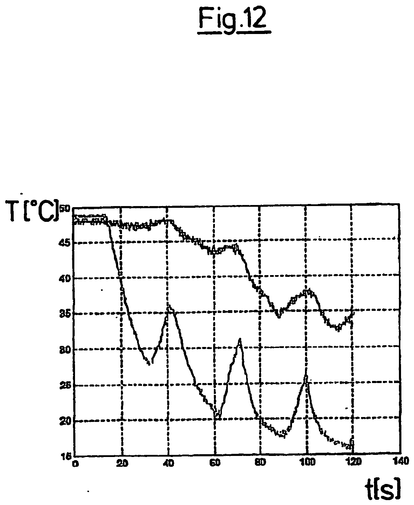

Um in diesem Fall einen Brauchwasserbedarf aufgrund der Öffnung einer Zapfstelle 7 zu erfassen, wird der Temperatursensor 96 genutzt. Dieser ist, wie in Fig. 11 schematisch dargestellt, nicht genau am Knotenpunkt des Strömungskanals 32 in dem Basiselement 28, in welchem die Abschnitte des Strömungskanals von den Anschlussöffnungen 36 und 38 sowie 40 zusammenlaufen, angeordnet, sondern ausgehend von diesem Knotenpunkt zu der Anschlussöffnung 38 hin versetzt. D. h. der Temperatursensor 96 befindet sich in dem Abschnitt des Strömungskanals, durch welchen das kalte Brauchwasser zugeführt wird. Wenn eine Zapfstelle für erwärmtes Brauchwasser geöffnet wird, führt dies zu einer Strömung von kaltem Brauchwasser in diesem Leitungsabschnitt, sodass, wie in der unteren Kurve in Fig. 12 zu erkennen ist, von dem Sensor 96 in dem Abschnitt des ersten Strömungskanals 32, welcher zu der Anschlussöffnung 38 verläuft, ein Temperaturabfall erfasst wird. Bei Erfassung eines solchen Temperaturabfalls schaltet die Steuereinheit 101 die Umwälzpumpe 46 zur Zufuhr von Heizmedium ein. In Fig. 12 sind mehrere aufeinanderfolgende Brauchwasseranforderungen dargestellt, welche jeweils wieder zu einem Temperaturabfall und bei Beendigung der Anforderung von erwärmten Brauchwasser wieder zu einem Temperaturanstieg führen, da sich das in dem Leitungsabschnitt, in welchem der Temperatursensor 96 angeordnet ist, befindliche Wasser dann wieder erwärmt.

Der Temperatursensor 96 ist in der zweiten Anschlussarmatur 30 geringfügig oberhalb des Knotenpunktes, an welchem sich die Strömungswege, bzw. Abschnitte des Strömungskanals 32 von den Anschlussöffnungen 36, 38 und 40 treffen, angeordnet. Auf diese Weise ist sichergestellt, dass sich das Wasser in dem Leitungsabschnitt, in welchem der Sensor 96 gelegen ist, bei Schließen der Zapfstelle für Brauchwasser und somit nicht vorhandener Strömung wieder durch das von der Anschlussöffnung 40 zu dem Eingang 16 strömende von der Umwälzpumpe 46 zirkulierte Brauchwasser langsam durch Wärmeübertragung erwärmt wird.

Wie oben bereits beschrieben, bildet der Wärmetauscher 6 das tragende Element der Brauchwassererwärmungseinheit 2, an welchem die Anschlussarmaturen 26, 30, 48 und gegebenenfalls 50 mit den Pumpen 46 und gegebenenfalls 76 sowie die Sensorbox 100 befestigt sind. Die Brauchwassererwärmungseinheit 2 bildet somit ein integriertes Modul, welches als vorgefertigte Einheit in eine Heizungsanlage bzw. in ein Heizungssystem eingebaut werden kann. Die Umwälzpumpen 46 und 76 sind relativ zu dem Wärmetauscher 6 so angeordnet, dass sich ihre Drehachsen X parallel zu den Oberflächen der Platten, insbesondere der äußeren Platten 13 erstrecken. Um den Wärmetauscher 6 mit den daran angebrachten Komponenten seinerseits an den Wärmespeicher 4 oder an einem anderen Element einer Heizungsanlage befestigen zu können, ist an dem Wärmetauscher 6 eine Haltevorrichtung in Form eines Bügels 106 angebracht. Der Bügel 106 bildet zum einen eine Befestigungsvorrichtung zur Befestigung an dem Wärmespeicher 4 und bildet darüber hinaus Griffelemente 108 an welchen die gesamte Brauchwassererwärmungseinheit 2 ergriffen werden kann, wodurch eine einfache Handhabung der gesamten Einheit bei der Montage möglich ist.

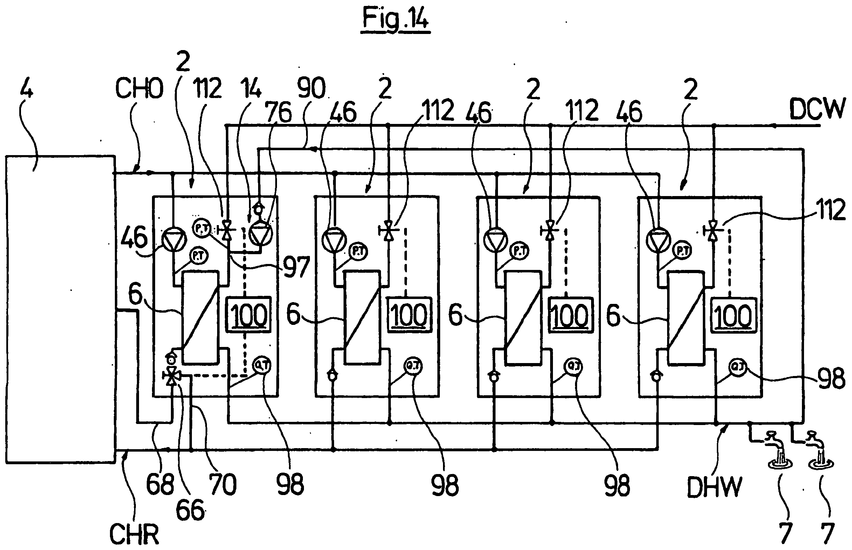

Fig. 14 zeigt eine spezielle Anordnung von Brauchwassererwärmungseinheiten 2. Bei dieser Anordnung sind, um einen größeren Brauchwasserbedarf befriedigen zu können, vier Brauchwassererwärmungseinheiten 2 gemäß der vorangehenden Beschreibung kaskadenartig parallel geschaltet. In dem gezeigten Beispiel sind vier Brauchwassererwärmungseinheiten 2 gezeigt. Es ist jedoch zu verstehen, dass in Abhängigkeit des maximalen Brauchwasserbedarfs auch weniger oder mehr Brauchwasserwärmungseinheiten 2 in entsprechender Weise angeordnet werden können. Alle Brauchwassererwärmungseinheiten 2 werden im gezeigten Beispiel mit Heizmedium aus einem gemeinsamen Wärmespeicher 4 versorgt. Die Brauchwassererwärmungseinheiten 2 sind bis auf eine identisch ausgebildet. Die erste Brauchwassererwärmungseinheit 2, diejenige, welche in Fig. 14 benachbart zu dem Wärmespeicher 4 gelegen ist, ist gemäß der Ausgestaltung, welche in den Fig. 1, 2, 4, 7, 8 und 11 gezeigt ist, ausgebildet, d. h. diese erste Brauchwassererwärmungseinheit 2 weist ein Brauchwasserzirkulationsmodul 74 auf. Das Brauchwasserzirkulationsmodul 74, welches die zweite Umwälzpumpe 46 aufweist, ist mit der Zirkulationsleitung 90 verbunden. Diese schließt sich an der am entferntesten gelegenen Zapfstelle 7 an die Leitung für erwärmtes Brauchwasser DHW an. Auf diese Weise kann erwärmtes Brauchwasser durch das gesamte Leitungssystem, welches die Zapfstellen 7 mit erwärmten Brauchwasser versorgt, zirkuliert werden. Die Funktion dieser Brauchwassererwärmungseinheit 2 mit Brauchwasserzirkulationsmodul 74 entspricht grundsätzlich der obigen Beschreibung. Die drei übrigen Brauchwassererwärmungseinheiten 2 sind ohne Brauchwasserzirkulationsmodul 74 ausgebildet, d. h. wie in der Fig. 5 gezeigt.

Jede der Brauchwassererwärmungseinheiten 2 gemäß Fig. 14 weist eine in die Umwälzpumpe 46 integrierte Steuereinheit 101 sowie eine separate Sensorbox 100 auf. Die einzelnen Steuereinheiten 101 der mehreren Brauchwassererwärmungsmodule 2 kommunizieren über Funkschnittstellen 110 (siehe Fig. 13) miteinander. In der ersten Brauchwassererwärmungseinheit 2 kann die Funkschnittstelle 110 auch zur Kommunikation mit der zweiten Umwälzpumpe 76 und gegebenenfalls dem Umschaltventil 66 Verwendung finden. Allerdings ist es auch möglich, dass das Umschaltventil 66 über die Sensorbox 100 angesteuert wird und dazu mit der Sensorbox 100 über eine elektrische Anschlussleitung verbunden ist.

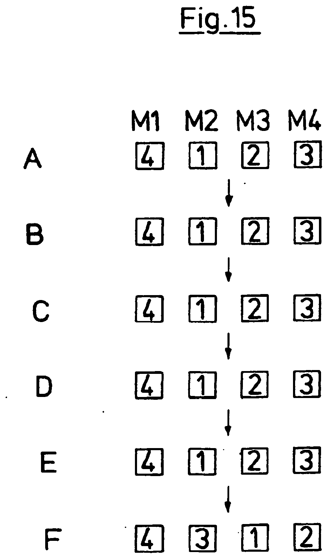

Die Steuereinheiten 101 aller Brauchwassererwärmungseinheiten 2 sind identisch ausgebildet und führen gemeinsam eine Steuerung der Kaskadenanordnung durch, wie sie anhand von Fig. 15 nun näher beschrieben wird.

In Fig. 15 sind die vier Brauchwassererwärmungseinheiten 2 als M1, M2, M3 und M4 bezeichnet. In den darunter angeordneten Kästchen ist durch Zahlen 1 bis 4 die Startreihenfolge der Brauchwassererwärmungseinheiten 2 dargestellt. Diejenige Brauchwassererwärmungseinheit 2, welche die Position 1 in der Startreihenfolge inne hat (im ersten Schritt M2) übernimmt eine Führungsfunktion, d. h. ist die führende Brauchwassererwärmungseinheit 2, d. h. deren Steuereinheit 101 veranlasst auch das Ein- und Ausschalten der weiteren Brauchwassererwärmungseinheiten 2.

Wenn es zu einer Brauchwasseranforderung kommt, d. h. eine der Zapfstellen 7 geöffnet wird, wird dies in der führenden Brauchwassererwärmungseinheit 2, wie oben beschrieben, durch den kombinierten Temperatur-Durchflusssensor 98 erfasst. Bei den mit M2 bis M4 gekennzeichneten Brauchwassererwärmungseinheiten 2 handelt es sich um die in Fig. 14 gezeigten Brauchwassererwärmungseinheiten 2 ohne Brauchwassercirkulationsmodul 74. Die das Brauchwasserzirkulationsmodul 74 aufweisende Brauchwassererwärmungseinheit 2 ist das in Fig. 15 mit M1 gekennzeichnete Modul. Dieses übernimmt nie eine Führungsfunktion. Wenn nun das führende Modul M2 im Schritt A eine Brauchwasseranforderung erkennt, wird zunächst diese Brauchwassererwärmungseinheit 2 in Betrieb genommen, d. h. die Umwälzpumpe 46 fördert Heizmedium zu dem zugehörigen Wärmetauscher 6. Wenn nun vom Schritt B zum C die Brauchwassererförderung abgeschaltet wird, ist diese führende Brauchwassererwärmungseinheit 2 im Schritt C immer noch erwärmt. Wenn nun vom Schritt C zum D erneut eine Brauchwasseranforderung durch Öffnen einer Zapfstelle 7 stattfindet, wird daher wiederum diese führende Brauchwassererwärmungseinheit 2 (M2) in Betrieb genommen. Wenn nun der Brauchwasserbedarf durch Öffnen beispielsweise einer weiteren Zapfstelle 7 steigt, wird im Schritt E eine nächste Brauchwassererwärmungseinheit 2 zugeschaltet, indem die Steuereinheit 101 der führenden Brauchwassererwärmungseinheit 2 (M2) der Brauchwassererwärmungseinheit 2 mit der zweiten Position in der Startreihenfolge (hier M3) ein Signal zur Betriebsaufnahme sendet. Deren Steuereinheit 101 nimmt dann entsprechend die Umwälzpumpe 46 dieser weiteren Brauchwassererwärmungseinheit 2 (M3) in Betrieb, um deren Wärmetauscher 6 mit Heizmedium zu versorgen.

Wenn nun vom Schritt E zum Schritt F die Brauchwasseranforderung wieder abgestellt wird, wird die Brauchwassererwärmungseinheit 2 abgeschaltet und die Steuereinheiten 101 der einzelnen Brauchwassererwärmungseinheiten 2 setzten untereinander die Startreihenfolge neu fest. Dies geschieht in der Weise, dass in der Startreihenfolge nun die Brauchwassererwärmungseinheit 2, welche zuletzt zugeschaltet wurde, die erste Position übernimmt und die zuerst eingeschaltete Brauchwassererwärmungseinheit 2, d. h. die bislang führende Brauchwassererwärmungseinheit 2, an die letzte Position rückt (hier M2). Auch die Führungsfunktion wechselt entsprechend zu der Brauchwassererwärmungseinheit 2, welche in der Startreihenfolge nun an erster Position steht (M2). Auf diese Weise wird eine gleichmäßige Nutzung der Brauchwasserwärmungseinheiten 2 sichergestellt und gleichzeitig erreicht, dass die Brauchwassererwärmungseinheit 2, welche zuerst in Betrieb genommen wird, vorzugsweise eine Brauchwassererwärmungseinheit 2 ist, welche noch Restwärme aufweist. Die Brauchwassererwärmungseinheit 2 mit dem Brauchwasserzirkulationsmodul 74 behält stets die letzte Position in der Startreihenfolge, d. h. diese wird nur bei maximaler Last zugeschaltet und dient im Übrigen nur dazu, dass zirkulierte Brauchwasser zu erwärmen. Sollte eine Brauchwassererwärmungseinheit 2 defekt sein oder ausfallen, so wird diese vollständig aus der Startreihenfolge herausgenommen, d. h. überhaupt nicht mehr in Betrieb genommen. Dies geschieht alles durch Kommunikation der identischen Steuereinheiten 101 untereinander, sodass auf eine zentrale Steuerung verzichtet werden kann.

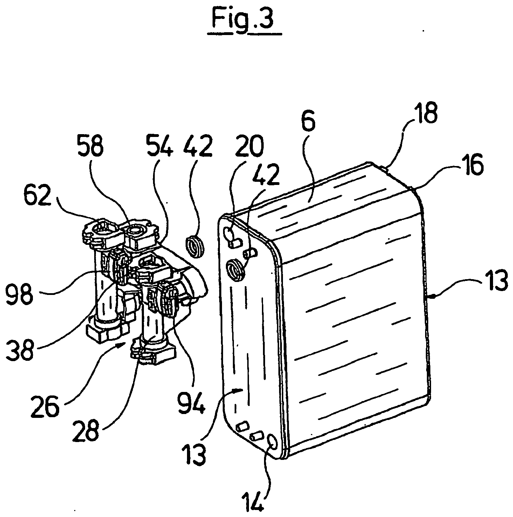

Zum Abschalten der Brauchwassererwärmungseinheiten 2, wenn die kein Brauchwasser erwärmen, ist zusätzlich ein oben anhand der Fig. 1 bis 13 nicht beschriebenes Ventil 112 in der Eingangsleitung für kaltes Brauchwasser DCW jeder Brauchwassererwärmungseinheit 2 angeordnet. Dieses Ventil 112 wird über die Sensorbox 100 von der Steuereinheit 101 angesteuert. Das Ventil 112 ist vorzugsweise über eine elektrische Anschlussleitung mit der Sensorbox 100 verbunden und die Steuereinheit 101 sendet über die Eingangsschnittstelle 104 und die Ausgabeschnittstelle 102 an die Sensorbox 100 ein Signal zum Öffnen und Schließen des Ventils 112. Wenn das Ventil 112 geschlossen ist, wird erreicht, dass kein Brauchwasser durch den jeweiligen Wärmetauscher 6 fließt, sodass verhindert wird, dass kaltes Brauchwasser durch den Wärmetauscher 6 der nicht genutzten Brauchwassererwärmungseinheiten 2 in die Ausgangsleitung für erwärmtes Brauchwasser DHW strömt.

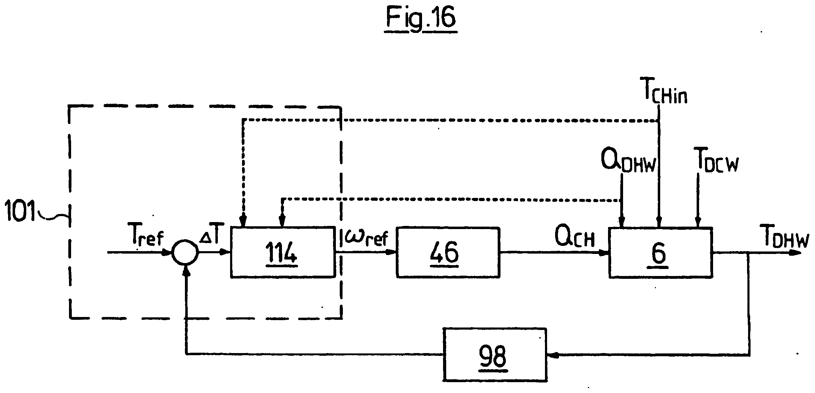

Anhand von Fig. 16 wird nun die Temperaturregelung des erwärmten Brauchwassers DHW in einer Brauchwassererwärmungseinheit 2 gemäß der obigen Beschreibung beschrieben. In der Steuereinheit 101 ist ein Regler 114 angeordnet, welchem eine Solltemperatur T_{ref} für das erwärmte Brauchwasser DHW vorgegeben wird. Diese Solltemperatur kann beispielsweise an der Steuereinheit 101 in der Umwälzpumpe 46 einstellbar sein. Dazu können an der Umwälzpumpe 46 Bedienelemente vorgesehen sein. Alternativ kann über eine drahtlose Schnittstelle, beispielsweise Infrarot oder Funk, auch eine Einstellung mittels einer Fernbedienung oder über eine Anlagenautomatisation erfolgen. Von dem Sollwert T_{ref} wird die von Sensor 98 erfasste Isttemperatur T_{DHW} des erwärmten Brauchwassers DHW subtrahiert. Die Differenz wird als Regeldifferenz ΔT dem Regler 114 zugeführt. Dieser gibt eine Solldrehzahl ω_{ref} für die Umwälzpumpe 76 aus, mit welcher die Ansteuerung der Umwälzpumpe 46 erfolgt, sodass diese einen Volumenstrom Q_{CH} von Heizmedium dem Wärmetauscher 6 zuführt. In diesem Wärmetauscher 6 wird dann das einströmende kalte Brauchwasser DCW erwärmt, sodass es ausgangsseitig des Wärmetauschers 6 die Ausgangstemperatur T_{DHW} hat. Dieser Istwert T_{DHW} wird dann, wie beschrieben, von dem Sensor 98 erfasst und dem Regler wieder zugeführt. D. h. erfindungsgemäß wird die Drehzahl der Umwälzpumpe 46 und damit der Volumenstrom Q_{CH} des Heizmediums in Abhängigkeit der Ausgangstemperatur des warmen Brauchwassers DHW geregelt.

Um ein schnelles Ansprechverhalten zu erreichen, ist in diesem Beispiel darüber hinaus eine Störgrößenaufschaltung im Regler 114 vorgesehen. Dazu wird auch der Volumenstrom des Brauchwassers über den Sensor 98 erfasst und dieser Brauchwasservolumenstrom Q_{DHW} dem Regler 114 als Störgröße aufgeschaltet. Darüber hinaus wird über Temperatursensor 94 die Temperatur T_{CHin} des von der Umwälzpumpe 46 dem Wärmetauscher 6 zugeführten Heizmediums erfasst und dem Regler 114 als Störgröße aufgeschaltet. Unter Berücksichtigung dieser Störgrößen wird die Solldrehzahl ω_{ref} der Umwälzpumpe 46 entsprechend eingestellt, sodass beispielsweise bei kälterem Heizmedium und/oder höherem Brauchwasservolumenstrom gleich die Drehzahl der Umwälzpumpe 46 erhöht werden kann, um schneller die geforderte Solltemperatur T_{ref} für das zu erwärmende Brauchwasser zu erreichen. Eine weitere Störgröße bzw. ein weiterer Parameter, welches Einfluss auf die Brauchwassertemperatur T_{DHW} hat ist die Temperatur T_{DCW} des einströmenden kalten Brauchwasser DCW. Im gezeigten Beispiel wird diese jedoch dem Regler 114 nicht als Störgröße aufgeschaltet, da die Kaltwassertemperatur in der Regel im Wesentlichen konstant ist. Für den Fall, dass die Kaltwassertemperatur erheblichen Schwankungen unterliegen kann, wäre es jedoch denkbar, auch die Temperatur T_{DCW} als Störgröße dem Regler 114 aufzuschalten.

### Bezugszeichenliste

- 2: - Brauchwassererwärmungseinheit
- 4: - Wärmespeicher
- 6: - Wärmetauscher
- 7: - Zapfstelle
- 8: - Gehäuse
- 10: - erster Strömungsweg für das Heizmedium
- 12: - zweiter Strömungsweg für das Brauchwasser
- 13: - äußere Platten
- 14: - Eingang
- 16: - Ausgang
- 18: - Eingang
- 20: - Ausgang
- 22: - Temperaturkurve des Heizmediums
- 24: - Temperaturkurve des Brauchwassers
- 26: - Erste Anschlussarmatur
- 28: - Basiselement
- 30: - Zweite Anschlussarmatur
- 32, 34: - Strömungskanäle
- 36, 38, 40: - Anschlussöffnungen bzw. Leitungsanschlüsse
- 42: - Dichtungen
- 44: - Zufuhrleitung
- 46: - Erste Umwälzpumpe
- 48: - Dritte Anschlussarmatur
- 50: - Vierte Anschlussarmatur
- 52: - Strömungskanal
- 54, 56, 58: - Anschlussöffnungen bzw. Leitungsanschlüsse
- 60: - Anschlussteil
- 62: - Leitungsanschluss
- 64: - Leitung
- 66: - Umschaltventil
- 68, 70: - Anschlüsse
- 72: - Kaltwasserleitung
- 74: - Brauchwasserzirkulationsmodul
- 76: - Zweite Umwälzpumpe
- 78: - Anschlussteil
- 80: - Rohr
- 81: - Aufnahme
- 82: - Anschlusselement
- 84: - Stutzen
- 86, 88: - Anschlussöffnungen
- 90: - Zirkulationsleitung
- 92: - Sensoraufnahme
- 94,96: - Temperatursensoren
- 97: - Knotenpunkt
- 98: - Sensor
- 99: - Leitungen
- 100: - Sensorbox
- 101: - Steuereinheit bzw. Steuer- und Regelelektronik
- 102: - Ausgabeschnittstelle
- 104: - Eingangsschnittstelle
- 106: - Bügel
- 108: - Hangriffe
- 110: - Funkschnittstelle
- 112: - Ventil

- DCW: - kaltes Brauchwasser
- DHW: - warmes Brauchwasser
- CHO: - heißes Heizmedium, Heizmediumzufuhr
- CHR: - kaltes Heizmedium, Heizmediumrückfluss
- T_{ref}: - Solltemperatur
- T_{DHW}: - Temperatur des erwärmten Brauchwassers
- T_{DCW}: - Temperatur des kalten Brauchwassers
- T_{CHin}: - Temperatur des Heizmediums
- Q_{DHW}: - Brauchwasservolumenstrom
- Q_{CH}: - Heizmediumvolumenstrom
- ΔT: - Regeldifferenz
- ω_{ref}: - Solldrehzahl

## Patentansprüche

1. Brauchwassererwärmungseinheit (2), welche vorgesehen ist zur Verwendung in einer Heizungsanlage, mit zumindest einem Wärmetauscher (6), welcher einen ersten Strömungsweg (10) für ein Heizmedium und einen zweiten Strömungsweg (12) für zu erwärmendes Brauchwasser aufweist, sowie zumindest einer mit dem ersten Strömungsweg (10) zur Förderung des Heizmediums verbundenen Umwälzpumpe (46),
wobei die Umwälzpumpe (46) in ihrer Drehzahl einstellbar ist und die Brauchwassererwärmungseinheit (2) eine Steuereinheit (101) aufweist, welche die Drehzahl der Umwälzpumpe (46) abhängig vom Wärmebedarf zum Erwärmen des Brauchwassers vorgibt, und wobei eingangsseitig des ersten Strömungsweges (10) des Wärmetauschers (6) in einem Strömungsweg für das Heizmedium ein Temperatursensor (94) zum Erfassen der Temperatur des Heizmediums angeordnet ist, ein- oder ausgangseitig des zweiten Strömungsweges (12) des Wärmetauschers (6) in dem Strömungsweg des Brauchwassers ein Durchflusssensor (98) angeordnet ist und die Steuereinheit (101) derart ausgebildet ist, dass sie die Drehzahl der das Heizmedium fördernden Umwälzpumpe (46) in Abhängigkeit einer von dem Temperatursensor (94) erfassten Heizmediumtemperatur und eines von dem Durchflusssensor (98) erfassten Brauchwasser-Volumenstromes vorgibt, **dadurch gekennzeichnet, dass** die Steuereinheit (101) zumindest teilweise in die Steuerelektronik der Umwälzpumpe (46) integriert ist.

2. Brauchwassererwärmungseinheit nach Anspruch 1, **dadurch gekennzeichnet, dass** ausgangsseitig des zweiten Strömungsweges (12) des Wärmetauschers (6) im Strömungsweg des erwärmten Brauchwassers ein Temperatursensor (98) angeordnet ist und dass die Steuereinheit (101) derart ausgebildet ist, dass sie die Drehzahl der das Heizmedium fördernden Umwälzpumpe (46) in Abhängigkeit der von dem Temperatursensor (98) erfassten Brauchwassertemperatur vorgibt.

3. Brauchwassererwärmungseinheit nach Anspruch 2, **dadurch gekennzeichnet, dass** die Steuereinheit (101) derart ausgestaltet ist, dass die von dem Temperatursensor (98) erfasste Brauchwassertemperatur als Regelgröße in einen Regelkreis eingeht, in welchem die Drehzahl der Umwälzpumpe (46) eine durch einen Regler (114) veränderbare Stellgröße bildet.

4. Brauchwassererwärmungseinheit nach einem der vorangehenden Ansprüche, **dadurch gekennzeichnet, dass** die Steuereinheit (101) einen Regler (114) mit Störgrößenaufschaltung aufweist, wobei die von dem Temperatursensor (94) erfasste Heizmediumtemperatur und/oder der von dem Durchflusssensor (98) erfasste Brauchwasser-Volumenstrom als Störgrößen aufgeschaltet werden.

5. System zur Brauchwassererwärmung mit zumindest zwei zueinander parallel geschalteten Brauchwassererwärmungseinheiten (2), welche jeweils zumindest einen Wärmetauscher (6), welcher einen ersten Strömungsweg (10) für ein Heizmedium und einen zweiten Strömungsweg (12) für zu erwärmendes Brauchwasser aufweist, sowie zumindest eine mit dem ersten Strömungsweg (10) zur Förderung des Heizmediums verbundenen Umwälzpumpe (46) aufweisen,
wobei die Umwälzpumpe (46) in ihrer Drehzahl einstellbar ist, und jede Brauchwassererwärmungseinheit (2) eine Steuereinheit (101) aufweist, welche die Drehzahl der jeweiligen Umwälzpumpe (46) abhängig vom Wärmebedarf zum Erwärmen des Brauchwassers vorgibt, und wobei eingangsseitig des ersten Strömungsweges (10) des Wärmetauschers (6) in einem Strömungsweg für das Heizmedium ein Temperatursensor (94) zum Erfassen der Temperatur des Heizmediums angeordnet ist, ein- oder ausgangseitig des zweiten Strömungsweges (12) des Wärmetauschers (6) in dem Strömungsweg des Brauchwassers ein Durchflusssensor (98) angeordnet ist, und jede Steuereinheit (101) derart ausgebildet ist, dass sie die Drehzahl der das Heizmedium fördernden Umwälzpumpe (46) in Abhängigkeit einer von dem Temperatursensor (94) erfassten Heizmediumtemperatur und eines von dem Durchflusssensor (98) erfassten Brauchwasser-Volumenstromes vorgibt, **dadurch gekennzeichnet, dass**
die Steuereinheiten (101) der Brauchwassererwärmungseinheiten (2) derart ausgebildet sind, dass bei einer Brauchwasseranforderung zunächst eine der Brauchwassererwärmungseinheiten (2) in Betrieb genommen wird und nach Bedarf eine oder mehrere weitere Brauchwassererwärmungseinheiten (2) zugeschaltet werden.

6. System nach Anspruch 5, **dadurch gekennzeichnet, dass** die Steuereinheiten (101) derart ausgebildet sind, dass eine weitere Brauchwassererwärmungseinheit (2) zugeschaltet wird, wenn die das Heizmedium fördernde Umwälzpumpe (46) einer zuerst in Betrieb genommen Brauchwassererwärmungseinheit (2) eine vorbestimmte Drehzahl oder Durchflussmenge erreicht.

7. System nach Anspruch 5 oder 6, **dadurch gekennzeichnet, dass** die Steuereinheiten (101) derart ausgestaltet sind, dass eine der Brauchwassererwärmungseinheiten (2) eine Führungsfunktion in der Weise übernimmt, dass bei einer Brauchwasseranforderung zunächst die führende Brauchwassererwärmungseinheit (2) in Betrieb genommen wird und deren Steuereinheit (101) eine oder mehrere weitere Brauchwassererwärmungseinheiten (2) nach Bedarf zuschaltet.

8. System nach Anspruch 7, **dadurch gekennzeichnet, dass** die Steuereinheiten (101) derart ausgestaltet sind, dass nach dem Zuschalten zumindest einer weiteren Brauchwassererwärmungseinheit (2) die Führungsfunktion zu einer zugeschalteten Brauchwassererwärmungseinheit (2) wechselt.

9. System nach einem der Ansprüche 5 bis 8, **dadurch gekennzeichnet, dass** die Steuereinheiten (101) derart ausgestaltet sind, dass die Reihenfolge, in welcher die einzelnen Brauchwassererwärmungseinheiten (2) bei Bedarf zugeschaltet werden, in Abhängigkeit der Laufzeit der einzelnen Brauchwassererwärmungseinheiten (2) so gewählt wird, dass eine gleichmäßige Nutzung der einzelnen Brauchwassererwärmungseinheiten (2) erreicht wird.

10. System nach einem der Ansprüche 5 bis 90, **dadurch gekennzeichnet, dass** die Steuereinheiten (101) derart ausgestaltet sind, dass eine defekte Brauchwassererwärmungseinheit (2) von der Zuschaltung bei Bedarf ausgenommen wird.

11. System nach einem der Ansprüche 5 bis 10, **dadurch gekennzeichnet, dass** eine der mehreren Brauchwassererwärmungseinheiten (2) eine zweite Umwälzpumpe (76) als Zirkulationspumpe für erwärmtes Brauchwasser aufweist, wobei die Steuereinheiten (101) vorzugsweise derart ausgebildet sind, dass die Brauchwassererwärmungseinheit (2) mit der Zirkulationspumpe (76) nur in einem Zirkulationsbetrieb oder bei maximaler Last des System in Betrieb genommen wird.

12. System nach einem der Ansprüche 5 bis 11, **dadurch gekennzeichnet, dass** die Steuereinheiten (101) der einzelnen Brauchwassererwärmungseinheiten jeweils eine Kommunikationsschnittstelle, insbesondere eine Funkschnittstelle (101) zur drahtlosen Kommunikation untereinander aufweisen.

13. System nach einem der Ansprüche 5 bis 12, **dadurch gekennzeichnet, dass** in den Brauchwassererwärmungseinheiten ausgangsseitig des zweiten Strömungsweges (12) des Wärmetauschers (6) im Strömungsweg des erwärmten Brauchwassers ein Temperatursensor (98) angeordnet ist und dass die Steuereinheit (101) derart ausgebildet ist, dass sie die Drehzahl der das Heizmedium fördernden Umwälzpumpe (46) in Abhängigkeit der von dem Temperatursensor (98) erfassten Brauchwassertemperatur vorgibt.

14. System nach Anspruch 13, **dadurch gekennzeichnet, dass** in den Brauchwassererwärmungseinheiten die Steuereinheit (101) derart ausgestaltet ist, dass die von dem Temperatursensor (98) erfasste Brauchwassertemperatur als Regelgröße in einen Regelkreis eingeht, in welchem die Drehzahl der Umwälzpumpe (46) eine durch einen Regler (114) veränderbare Stellgröße bildet.

15. System nach einem der Ansprüche 5 bis 14, **dadurch gekennzeichnet, dass** in den Brauchwassererwärmungseinheiten die Steuereinheit (101) einen Regler (114) mit Störgrößenaufschaltung aufweist, wobei die von dem Temperatursensor (94) erfasste Heizmediumtemperatur und/oder der von dem Durchflusssensor (98) erfasste Brauchwasser-Volumenstrom als Störgrößen aufgeschaltet werden.

16. System nach einem der Ansprüche 5 bis 15, **dadurch gekennzeichnet, dass** in der Brauchwassererwärmungseinheit die Steuereinheit (101) zumindest teilweise in die Steuerelektronik der Umwälzpumpe (46) integriert ist.

## Claims

1. A domestic water heating unit (2) which is provided for use in a heating installation, comprising at least one heat exchanger (6), which has a first flow path (10) for a heating medium and a second flow path (12) for domestic water to be heated, and at least one circulating pump (46) connected to the first flow path (10) to convey the heating medium,
the speed of the circulating pump (46) being adjustable and the domestic water heating unit (2) comprising a control unit (101) which defines the speed of the circulating pump (46) as a function of the heat demand for heating the domestic water, and a temperature sensor (94) for detecting the temperature of the heating medium being arranged on the inlet side of the first flow path (10) of the heat exchanger (6) in a flow path for the heating medium, a flow rate sensor (98) being arranged on the inlet or outlet side of the second flow path (12) of the heat exchanger (6) in the flow path of the domestic water, and the control unit (101) being designed in such a way that it defines the speed of the circulating pump (46) conveying the heating medium as a function of a heating medium temperature detected by the temperature sensor (94) and as a function of a domestic water volume flow rate detected by the flow rate sensor (98), **characterized in that** the control sensor (101) is integrated at least in part in the control electronics of the circulating pump (46).

2. The domestic water heating unit according to Claim 1, **characterized in that** a temperature sensor (98) is arranged on the outlet side of the second flow path (12) of the heat exchanger (6) in the flow path of the heated domestic water, and **in that** the control unit (101) is designed in such a way that it defines the speed of the circulating pump (46) conveying the heating medium as a function of the domestic water temperature detected by the temperature sensor (98).

3. The domestic water heating unit according to Claim 2, **characterized in that** the control unit (101) is designed in such a way that the domestic water temperature detected by the temperature sensor (98) enters a control circuit as a controlled variable, in which control circuit the speed of the circulating pump (46) forms a manipulated variable which can be changed by a regulator (114).

4. The domestic water heating unit according to one of the preceding claims, **characterized in that** the control unit (101) comprises a regulator (114) with feedforward control, wherein the heating medium temperature detected by the temperature sensor (94) and/or the domestic water volume flow rate detected by the flow rate sensor (98) are forwarded as disturbance variables.

5. A system for the heating of domestic water, comprising at least two domestic water heating units (2), connected in parallel, which each have at least one heat exchanger (6), which has a first flow path (10) for a heating medium and a second flow path (12) for the domestic water to be heated, and also have at least one circulating pump (46) connected to the first flow path (10) for conveying the heating medium,
the speed of the circulating pump (46) being adjustable, and each domestic water heating unit (2) having a control unit (101), which defines the speed of the corresponding circulating pump (46) depending on the heat requirement for heating the domestic water, and a temperature sensor (94) for detecting the temperature of the heating medium being arranged on the inlet side of the first flow path (10) of the heat exchanger (6) in a flow path for the heating medium, a flow rate sensor (98) being arranged on the inlet or outlet side of the second flow path (12) of the heat exchanger (6) in the flow path of the domestic water, and each control unit (101) being designed in such a way that it defines the speed of the circulating pump (46) conveying the heating medium as a function of a heating medium temperature detected by the temperature sensor (94) and as a function of a domestic water volume flow rate detected by the flow rate sensor (98), **characterized in that**
the control units (101) of the domestic water heating units (2) are designed in such a way that, in the event of a domestic water demand, one of the domestic water heating units (2) is started up first, and one or more further domestic water heating units (2) is/are connected as required.

6. The system according to Claim 5, **characterized in that** the control units (101) are designed in such a way that a further domestic water heating unit (2) is connected when the circulating pump (46), conveying the heating medium, of a domestic water heating unit (2) started up first reaches a predetermined speed or flow rate.

7. The system according to either Claim 5 or Claim 6, **characterized in that** the control units (101) are designed in such a way that one of the domestic water heating units (2) adopts a management function in such a way that the managing domestic water heating unit (2) is started up first in the event of a domestic water demand and the control unit (101) thereof connects one or more further domestic water heating units (2) as required.

8. The system according to Claim 7, **characterized in that** the control units (101) are designed in such a way that, once at least one further domestic water heating unit (2) has been connected, the management function switches to a connected domestic water heating unit (2).

9. The system according to one of Claims 5 to 8, **characterized in that** the control units (101) are designed in such a way that the sequence in which the individual domestic water heating units (2) are connected as required is selected as a function of the running time of the individual domestic water heating units (2) in such a way that uniform utilisation of the individual domestic water heating units (2) is achieved.

10. The system according to one of Claims 5 to 9, **characterized in that** the control units (101) are designed in such a way that a faulty domestic water heating unit (2) is excluded from the connection as necessary.

11. The system according to one of Claims 5 to 10, **characterized in that** one of the plurality of domestic water heating units (2) comprises a second circulating pump (76) as a circulation pump for heated domestic water, the control units (101) preferably being designed in such a way that the domestic water heating unit (2) comprising the circulation pump (76) is only operated in a circulation mode or when the system is at maximum load.

12. The system according to one of Claims 5 to 11, **characterized in that** each of the control units (101) of the individual domestic water heating units has a communication interface, in particular a radio interface (101) for wireless communication with one another.

13. The system according to one of Claims 5 to 12, **characterized in that** a temperature sensor (98) is arranged in the domestic water heating units on the outlet side of the second flow path (12) of the heat exchanger (6) in the flow path of the heated domestic water, and **in that** the control unit (101) is designed in such a way that it defines the speed of the circulating pump (46) conveying the heating medium as a function of the domestic water temperature detected by the temperature sensor (98).

14. The system according to Claim 13, **characterized in that** in the domestic water heating units the control unit (101) is designed in such a way that the domestic water temperature detected by the temperature sensor (98) enters a control circuit as a controlled variable, in which control circuit the speed of the circulating pump (46) forms a manipulated variable which can be changed by a regulator (114).

15. The system according to one of Claims 5 to 14, **characterized in that** in the domestic water heating units the control unit (101) comprises a regulator (114) with feedforward control, wherein the heating medium temperature detected by the temperature sensor (94) and/or the domestic water volume flow rate detected by the flow rate sensor (98) are forwarded as disturbance variables.

16. The system according to one of Claims 5 to 15, **characterized in that** in the domestic water heating unit the control unit (101) is integrated at least in part in the control electronics of the circulating pump (46).

## Revendications

1. Unité de chauffage d'eau industrielle (2) qui est prévue pour être utilisée dans une installation de chauffage, comprenant au moins un échangeur de chaleur (6) qui comporte une première voie d'écoulement (10) pour un milieu de chauffage et une seconde voie d'écoulement (12) pour de l'eau industrielle à chauffer, ainsi qu'au moins une pompe de recirculation (46) reliée à la première voie d'écoulement (10) et destinée à transporter le milieu de chauffage,
la pompe de recirculation (46) étant réglable dans sa vitesse de rotation et l'unité de chauffage d'eau industrielle (2) comprenant une unité de commande (101) qui spécifie la vitesse de rotation de la pompe de recirculation (46) en fonction de la demande de chaleur pour le chauffage de l'eau industrielle,
et côté entrée de la première voie d'écoulement (10) de l'échangeur de chaleur (6), étant disposé, dans une voie d'écoulement du milieu de chauffage, un capteur de température (94) destiné à détecter la température du milieu de chauffage, côté entrée ou côté sortie de la seconde voie d'écoulement (12) de l'échangeur de chaleur (6), un capteur de débit (98) étant disposé dans la voie d'écoulement de l'eau industrielle, et l'unité de commande (101) étant conçue de telle sorte qu'elle spécifie la vitesse de rotation de la pompe de recirculation (46) transportant le milieu de chauffage, en fonction d'une température du milieu de chauffage détectée par le capteur de température (94) et d'un débit volumique d'eau industrielle détecté par le capteur de débit (98), **caractérisée en ce que** l'unité de commande (101) est intégrée au moins partiellement dans l'électronique de commande de la pompe de recirculation (46).

2. Unité de chauffage d'eau industrielle selon la revendication 1, **caractérisée en ce que**, côté sortie de la seconde voie d'écoulement (12) de l'échangeur de chaleur (6), un capteur de température (98) est disposé dans la voie d'écoulement de l'eau industrielle chauffée et **en ce que** l'unité de commande (101) est conçue de telle sorte qu'elle spécifie la vitesse de rotation de la pompe de recirculation (46) transportant le milieu de chauffage, en fonction de la température de l'eau industrielle détectée par le capteur de température (98).

3. Unité de chauffage d'eau industrielle selon la revendication 2, **caractérisée en ce que** l'unité de commande (101) est conçue de telle sorte que la température de l'eau industrielle détectée par le capteur de température (98) entre en qualité de grandeur commandée dans un circuit de régulation dans lequel la vitesse de rotation de la pompe de recirculation (46) forme une grandeur de réglage qui peut être modifiée par un régulateur (114).

4. Unité de chauffage d'eau industrielle selon l'une des revendications précédentes, **caractérisée en ce que** l'unité de commande (101) comprend un régulateur (114) avec activation d'une grandeur perturbatrice, la température du milieu de chauffage détectée par le capteur de température (94) et/ou le débit volumique d'eau industrielle détecté par le capteur de débit (98) étant entré(s) comme grandeur(s) perturbatrice(s)

5. Système de chauffage d'eau industrielle comprenant au moins deux unités de chauffage d'eau industrielle (2) selon l'une des revendications précédentes branchées en parallèle, qui comprennent chacune au moins un échangeur de chaleur (6) qui comporte une première voie d'écoulement (10) pour un milieu de chauffage et une seconde voie d'écoulement (12) pour de l'eau industrielle à chauffer, ainsi qu'au moins une pompe de recirculation (46) reliée à la première voie d'écoulement (10) et destinée à transporter le milieu de chauffage,
la pompe de recirculation (46) étant réglable dans sa vitesse de rotation et chaque unité de chauffage d'eau industrielle (2) comprenant une unité de commande (101) qui spécifie la vitesse de rotation de la pompe de recirculation (46) en fonction de la demande de chaleur pour le chauffage de l'eau industrielle, et côté entrée de la première voie d'écoulement (10) de l'échangeur de chaleur (6), étant disposé, dans une voie d'écoulement du milieu de chauffage, un capteur de température (94) destiné à détecter la température du milieu de chauffage, côté entrée ou côté sortie de la seconde voie d'écoulement (12) de l'échangeur de chaleur (6), un capteur de débit (98) étant disposé dans la voie d'écoulement de l'eau industrielle, et chaque unité de commande (101) étant conçue de telle sorte qu'elle spécifie la vitesse de rotation de la pompe de recirculation (46) transportant le milieu de chauffage, en fonction d'une température du milieu de chauffage détectée par le capteur de température (94) et d'un débit volumique d'eau industrielle détecté par le capteur de débit (98), **caractérisée en ce que** les unités de commande (101) des unités de chauffage d'eau industrielle (2) sont conçues de telle sorte qu'en présence d'une demande d'eau industrielle, une des unités de chauffage d'eau industrielle (2) est mise en fonctionnement en premier lieu et que, selon la demande, une ou plusieurs autres unité(s) de chauffage d'eau industrielle (2) est ou sont mise(s) en fonctionnement.

6. Système selon la revendication 5, **caractérisé en ce que** les unités de commande (101) sont conçues de telle sorte qu'une unité de chauffage d'eau industrielle (2) supplémentaire est mise en fonctionnement lorsque la pompe de recirculation (46) transportant le milieu de chauffage qui appartient à une unité de chauffage d'eau industrielle (2) mise en fonctionnement en premier lieu, atteint une vitesse de rotation ou un débit prédéterminé(e).

7. Système selon la revendication 5 ou 6, **caractérisé en ce que** les unités de commande (101) sont conçues de telle sorte qu'une des unités de chauffage d'eau industrielle (2) assure une fonction de direction telle qu'en présence d'une demande d'eau industrielle, l'unité de chauffage d'eau industrielle directrice (2) est mise en fonctionnement en premier lieu et que son unité de commande (101) met en fonctionnement une ou plusieurs unités de chauffage d'eau industrielle (2) supplémentaires selon la demande.

8. Système selon la revendication 7, **caractérisé en ce que** les unités de commande (101) sont conçues de telle sorte qu'après la mise en fonctionnement d'au moins une unité de chauffage d'eau industrielle (2) supplémentaire, la fonction de direction est reportée sur une unité de chauffage d'eau industrielle (2) mise en fonctionnement.

9. Système selon l'une des revendications 5 à 8, **caractérisé en ce que** les unités de commande (101) sont conçues de telle sorte que l'ordre dans lequel les diverses unités de chauffage d'eau industrielle (2) sont mises en fonctionnement à la demande est choisi en fonction de la durée de fonctionnement des diverses unités de chauffage d'eau industrielle (2) de manière à obtenir une exploitation homogène des diverses unités de chauffage d'eau industrielle (2).

10. Système selon l'une des revendications 5 à 9, **caractérisé en ce que** les unités de commande (101) sont conçues de telle sorte qu'une unité de chauffage d'eau industrielle (2) défectueuse est exclue de la mise en circuit si nécessaire.

11. Système selon l'une des revendications 5 à 10, **caractérisé en ce qu'**une des plusieurs unités de chauffage d'eau industrielle (2) comprend une seconde pompe de recirculation (76) en tant que pompe de circulation de l'eau industrielle chauffée, les unités de commande (101) étant de préférence conçues de telle sorte que l'unité de chauffage d'eau industrielle (2) comportant la pompe de circulation (76) est mise en fonctionnement exclusivement dans une fonction de circulation ou en cas de charge maximale du système.

12. Système selon l'une des revendications 5 à 11, **caractérisé en ce que** les unités de commande (101) des diverses unités de chauffage d'eau industrielle comprennent chacune une interface de communication, en particulier une interface radio (110), permettant d'établir entre elles une intercommunication sans fil.

13. Système selon l'une des revendications 5 à 12, **caractérisé en ce que**, dans les unités de chauffage d'eau industrielle (2), du côté de sortie de la seconde voie d'écoulement (12) de l'échangeur de chaleur (6), un capteur de température (98) est disposé dans la voie d'écoulement de l'eau industrielle chauffée et **en ce que** l'unité de commande (101) est conçue de façon telle qu'elle détermine la vitesse de rotation de la pompe de recirculation (46) transportant le milieu de chauffage, en fonction de la température de l'eau industrielle saisie par le capteur de température (98).

14. Système selon la revendication 13, **caractérisé en ce que**, dans les unités de chauffage d'eau industrielle, l'unité de commande (101) est conçue de façon telle que la température de l'eau industrielle saisie par le capteur de température (98) entre, en tant que grandeur de réglage, dans un circuit de régulation dans lequel la vitesse de rotation de la pompe de recirculation (46) constitue une grandeur de réglage pouvant être modifiée par un régulateur (114).

15. Système selon l'une des revendications 5 à 14, **caractérisé en ce que**, dans les unités de chauffage d'eau industrielle, l'unité de commande (101) comprend un régulateur (114) avec activation de grandeurs perturbatrices, la température du milieu de chauffage saisie par le capteur de température (94) et/ou le flux volumique d'eau industrielle saisi par le capteur de débit (98) étant activés en tant que grandeurs perturbatrices.

16. Système selon l'une des revendications 5 à 15, **caractérisé en ce que**, dans les unités de chauffage d'eau industrielle, l'unité de commande (101) est au moins partiellement intégrée dans l'électronique de commande de la pompe de recirculation (46).
